# EUROPEAN PATENT APPLICATION

(11) **EP 4 300 614 A2**
(43) Date of publication of application: **03.01.2024**
(21) Application number: 23178652.6
(22) Date of filing: 12.06.2023
(51) Int. Cl.: H01M 4/04, H01M 4/131, H01M 4/133, H01M 4/1391, H01M 4/1393, H01M 4/36, H01M 4/485, H01M 4/587, H01M 10/0525, H01M 10/0562, H01M 4/02

(54) **ALL-SOLID-STATE SECONDARY BATTERY AND METHOD OF PREPARING THE SAME**

(30) Priority: 29.06.2022 KR 20220079997; 31.05.2023 KR 20230070407
(71) Applicant: Samsung Electronics Co., Ltd., Suwon-si, Gyeonggi-do 16677 (KR)
(72) Inventor: KIM, Jusik, 16678 Suwon-si (KR); KIM, Sewon, 16678 Suwon-si (KR); KIM, Yongsu, 16678 Suwon-si (KR); KIM, Ryounghee, 16678 Suwon-si (KR); LEE, Myungjin, 16678 Suwon-si (KR)
(74) Representative: Elkington and Fife LLP

(57) **Abstract**

An all-solid-state battery including a cathode including a cathode active material; an anode including an anode current collector, a first anode active material layer, and a second anode active material layer; and a solid electrolyte arranged between the cathode and the anode, wherein the first anode active material layer is arranged adjacent to the solid electrolyte and comprises M¹-M²Oₓ, Li-M¹-M²Oₓ, or a combination thereof, wherein the first metal M¹ and the second metal M² are each independently at least one element that reacts with lithium to form a lithium alloy or compound, x>0, the second anode active material layer is arranged between the anode current collector and the first anode active material layer and includes a second anode active material, and the second anode active material includes a carbon-containing anode active material, or a carbon-containing anode active material, and at least one of a metallic or metalloid anode active material.

## Description

### FIELD OF THE INVENTION

The present subject matter relates to an all-solid-state secondary battery and a method of preparing the same.

### BACKGROUND OF THE INVENTION

Recently, the development of batteries with high energy density and safety has been actively carried out in response to industrial demands. For example, lithium-ion batteries are being put to practical use not only in the fields of information-related devices and communication devices, but also in the fields of automobiles. In the fields of automobiles, safety is considered especially important as it is related to protecting life.

Lithium-ion batteries currently available on the market use a liquid electrolyte containing a flammable organic solvent, and thus overheating and fire may occur in the case of a short circuit. In this regard, all-solid-state secondary batteries using a solid electrolyte instead of a liquid electrolyte have been proposed.

All-solid-state batteries do not contain a flammable organic solvent, and thus the possibility of fire or explosion may be greatly reduced even in the case of a short circuit. Therefore, such all-solid-state secondary batteries may significantly increase stability compared to lithium-ion batteries using a liquid electrolyte.

In all-solid-state secondary batteries in the art, an electrolyte used is solid, and thus lithium may locally be deposited at an interface between a solid electrolyte layer and an anode. The deposited lithium may grow and consequently penetrate a solid electrolyte layer, resulting in a short circuit of the battery. In addition, as the solid electrolyte layer and the anode are simply stacked, the effective interface area between the solid electrolyte layer and the anode becomes smaller than the actual contact area therebetween. Accordingly, as the interfacial resistance increases at the interface between the solid electrolyte layer and the anode, the internal resistance of the battery may increase, thereby degrading the cycle characteristics and capacity of the battery.

### SUMMARY OF THE INVENTION

Provided is an all-solid-state secondary battery in which a short circuit is prevented during charging and discharging, and cycle characteristics are improved.

Provided is a method of preparing the all-solid-state secondary battery as described herein.

Additional aspects will be set forth in part in the detailed description that follows and, in part, will be apparent from the detailed description, or may be learned by practice of the presented exemplary embodiments.

According to an aspect, an all-solid-state secondary battery includes:
a cathode including a cathode active material,
an anode including an anode current collector, a first anode active material layer, and a second anode active material layer, and
a solid electrolyte arranged between the cathode and the anode,
wherein the first anode active material layer is arranged adjacent to the solid electrolyte and includes an M¹-M²Oₓ composite, a Li-M¹-M²Oₓ composite, or a combination thereof,
wherein M¹ is a first metal and M² is a second metal,
the first metal and the second metal are each independently at least one element that reacts with lithium to form a lithium alloy or a lithium compound, and x is a number greater than 0, and
the second anode active material layer is arranged between the anode current collector and the first anode active material layer, the second anode active material layer includes a second anode active material, and the second active material layer includes a carbon-containing anode active material, or a carbon-containing anode active material, and a metallic anode active material or a metalloid anode active material.

According to another aspect, a method of preparing the all-solid-state secondary battery includes
providing a solid electrolyte,
arranging a first anode active material layer on a surface of the solid electrolyte,
forming a plurality of pores in the first anode active material layer to prepare a porous first anode active material layer,
arranging an anode current collector on the porous first anode active material layer, wherein a second anode active material is arranged on the anode current collector, and
arranging a cathode active material layer on an opposite surface of the solid electrolyte.

### BRIEF DESCRIPTION OF THE DRAWINGS

The above and other aspects, features, and advantages of certain exemplary embodiments will be more apparent from the following detailed description taken in conjunction with the accompanying drawings, in which:
FIG. 1 is a cross-sectional view of an anode structure for an all-solid-state secondary battery according to one or more embodiments;
FIG. 2 is a cross-sectional view of an anode structure for an all-solid-state secondary battery according to another embodiment;
FIGS. 3A, 4A, 5A, and 6A are Nyquist plots of imaginary impedance (Z", ohm square centimeters (ohm cm²)) versus real impedance (Z', ohm cm²) and are graphs showing impedance characteristics of the all-solid-state secondary batteries of Example 1, Reference Example 1, Comparative Example 1, and Comparative Example 2, respectively;
FIGS. 3B, 4B, 5B, and 6B are graphs of potential (Volts (V) versus Li⁺/Li) versus capacity (milliampere hours per square centimeter (mAh/cm²)) and show charging and discharging characteristics of the all-solid-state secondary batteries of Example 1, Reference Example 1, Comparative Example 1, and Comparative Example 2, respectively;
FIGS. 3C, 4C, 5C, and 6C are graphs of capacity (mAh/cm²) versus number of cycles (times) and show charging and discharging characteristics at room temperature of the all-solid-state secondary batteries of Example 1, Reference Example 1, Comparative Example 1, and Comparative Example 2, respectively;
FIG. 7 is a graph of capacity (mAh/cm²) versus numbers of cycles (times) and shows lifespan characteristics of the all-solid-state secondary batteries of Example 3 and Comparative Example 3;
FIG. 8 is a graph of capacity (mAh/cm²) versus numbers of cycles (times) and shows lifespan characteristics of all-solid-state secondary battery of Example 3;
FIG. 9 is a graph of potential (V vs. Li⁺/Li) versus capacity (mAh/cm²) and shows charging and discharging characteristics of all-solid-state secondary batteries of Example 3, based on the results of a charging and discharging test;
FIG. 10A is a Nyquist plot of imaginary impedance (Z", ohm cm²) versus real impedance (Z', ohm cm²) and shows impedance characteristics of an all-solid-state secondary battery of Example 4;
FIG. 10B is a graph of capacity (mAh/cm²) versus number of cycles (times) and shows lifespan characteristics of an all-solid-state secondary battery of Example 4;
FIG. 11A is a Nyquist plot of imaginary impedance (Z", ohm cm²) versus real impedance (Z', ohm cm²) and shows impedance characteristics of the all-solid-state secondary batteries of Example 1 and Comparative Example 4;
FIG. 11B is a graph of capacity (mAh/cm²) versus number of cycles (times) and shows lifespan characteristics of the all-solid-state secondary batteries of Example 1 and Comparative Example 4;
FIG. 12A is a Nyquist plot of imaginary impedance (Z", ohm cm²) versus real impedance (Z', ohm cm²) and shows impedance characteristics of the all-solid-state secondary batteries of Example 1 and Comparative Example 5;
FIGS. 12B and 12C are graphs of potential (V vs. Li⁺/Li) versus capacity (mAh/cm²) and each shows charge/discharge profiles of all-solid-state secondary batteries of Example 1 and Comparative Example 5, respectively;
FIGS. 13A and 13B are graphs of intensity (arbitrary units, a.u.) versus binding energy (electron Volts, eV) and each shows X-ray photoelectron spectra of Ge 2p3 and Te3d in a GeTe film/LLZTO (oxide solid electrolyte)/Li/Cu (current collector) structure;
FIG. 14A is a Nyquist plot of imaginary impedance (Z", ohm cm²) versus real impedance (Z', ohm cm²) and shows impedance characteristics of the all-solid-state secondary battery of Example 5; and
FIG. 14B is a graph of potential (V vs. Li⁺/Li) versus capacity (mAh/cm²) and shows a potential change according to the capacity per unit area in the all-solid-state secondary battery of Example 5.

### DETAILED DESCRIPTION OF THE EMBODIMENTS

Reference will now be made in further detail to exemplary embodiments, examples of which are illustrated in the accompanying drawings, wherein like reference numerals refer to like elements throughout. In this regard, the present exemplary embodiments may have different forms and should not be construed as being limited to the detailed descriptions set forth herein. Accordingly, the exemplary embodiments are merely described in further detail below, and by referring to the figures, to explain certain aspects. As used herein, the term "and/or" includes any and all combinations of one or more of the associated listed items. Expressions such as "at least one of," when preceding a list of elements, modify the entire list of elements and do not modify the individual elements of the list.

The terminology used herein is for the purpose of describing one or more exemplary embodiments only and is not intended to be limiting. As used herein, the singular forms "a," "an," and "the" are intended to include the plural forms as well, unless the context clearly indicates otherwise. The term "or" means "and/or." It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

It will be understood that, although the terms first, second, third etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present embodiments.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

It will be understood that when an element is referred to as being "on" another element, it can be directly in contact with the other element or intervening elements may be present therebetween. In contrast, when an element is referred to as being "directly on" another element, there are no intervening elements present.

Unless otherwise defined, all terms (including technical and scientific terms) used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Hereinafter, an anode structure for an all-solid-state secondary battery according to one or more embodiments, an all-solid-state secondary battery including the same, and a method of preparing the all-solid-state secondary battery will be described in more detail.

An aspect provides an all-solid-state secondary battery including:
a cathode including a cathode active material;
an anode including an anode current collector, a first anode active material layer, and a second anode active material layer; and
a solid electrolyte arranged between the cathode and the anode.

The first anode active material layer is arranged adjacent to the solid electrolyte, and includes:
an M¹-M²Oₓ composite, a Li-M¹-M²Oₓ composite, or a combination thereof,
wherein M¹ is a first metal and M² is a second metal,
wherein the second anode active material layer is arranged between the anode current collector and the first anode active material layer, the second anode active material layer comprises a second anode active material, and the second anode active material includes a carbon-containing anode active material, or a carbon-containing anode active material, and a metallic anode active material or a metalloid anode active material, and
the first metal and the second metal are each independently at least one element that reacts with lithium to form a lithium alloy or a lithium compound, and x is a number greater than 0 (x>0).The all-solid-state secondary battery using a lithium alloy as the anode has a low lithium ion diffusivity as compared to an all-solid-state secondary battery including an anode consisting of a carbon-containing anode active material. In this regard, movement of lithium may not be fast, and accordingly the kinetic performance of the all-solid-state secondary battery using the lithium alloy as the anode may be degraded.

In addition, since the anode including the carbon-containing anode active material in the all-solid-state secondary battery does not have an excellent binding force with a solid electrolyte, thus interfacial stability between the anode and the solid electrolyte may not be sufficient. In addition, in the case where an anode consists of a metal only, current imbalance may occur due to agglomeration of particles in a process of alloying and dealloying with lithium during charging and discharging cycles, and accordingly, an alloy phase having low lithium diffusion may be formed and some of the high rate characteristics may be degraded. In addition, when a metal diffuses within an electrode during charging and discharging cycles at a high temperature, the lifespan characteristics of an all-solid-state secondary battery may be degraded.

The all-solid-state secondary battery according to one or more embodiments is provided to solve the above-mentioned problems. Since the first anode active material layer in contact with the solid electrolyte includes the M¹-M²Oₓ composite, the Li-M¹-M²Oₓ composite, or a combination thereof, void formation or volume changes may be suppressed at high current density during charging and discharging cycles, and the all-solid-state secondary battery is controlled to have a pore structure with a large surface area, thereby obtaining an effect of widening a surface diffusion path, and thus a lithium diffusion rate increases in a solution with a pH of 7 or less.

In this regard, by controlling the lithium ion diffusivity of the first anode active material layer, the movement of lithium ions from the first anode active material layer to the second anode active material layer may be controlled to be fast. In addition, an adhesion force between the solid electrolyte and the second anode active material layer arranged to be in contact with the anode current collector may be improved. In addition, as described herein, the void formation at high current density during charging and discharging cycles may be suppressed, and thus the rate characteristics and the lifespan characteristics may be improved.

In the M¹-M²Oₓ composite and the Li-M¹-M²Oₓ composite, the first metal M¹ may be a material inducing a reversible alloying/dealloying reaction with lithium, and M²Oₓ, which is an oxide of the second metal M², may serve as a backbone matrix and may have a role in the uniform induction and the suppression of the void formation during charging and discharging cycles.

In the M¹-M²Oₓ composite and the Li-M¹-M²Oₓ composite, the first metal (M¹) and the second metals (M²) may each independently refer to an element that maintains a solid state in a solution with a pH of 7 or less, and may each have a lithium ion diffusivity of 1×10⁻¹⁴ square centimeters per second (cm²/sec) or greater at 25°C. Here, the term "metal" used herein includes at least one selected metal and metalloid. For example, the first metal (M¹) and the second metals (M²) may each be a metal that is alloyable with lithium,

The first metal and the second metal, M¹ and M², may be identical to (the same as) or different from each other, and may each independently be Si, Sn, Ag, Al, Zn, Ge, Mg, Te, Pb, As, Na, Bi, Ti, B, W, Mn, Fe, Ni, Cu, Cr, Zr, Ce, or a combination thereof.

The M¹-M²Oₓ composite and the Li-M¹-M²Oₓ composite may each be prepared by coating and treating a metal (e.g., Te, Si, Ge, Sb, or the like) or a metal alloy (e.g., GeTe, or the like). Component analysis of these composites may be performed by resonance Raman spectroscopy, X-photoelectron spectroscopy (XPS), transmission electron microscopy (TEM), energy dispersed X-ray (EDX) electron energy loss spectroscopy (EELS), inductively coupled plasma-mass spectroscopy (ICP-MS), or the like.

In the M¹-M²Oₓ composite and the Li-M¹-M²Oₓ composite, for example, 0<x≤2.

In the M¹-M²Oₓ composite and the Li-M¹-M²Oₓ composite, the first and second metals M¹ and M² may be the same as or different from each other, and the composite may include, for example, Te-TeOx, wherein 0<x≤2; Liₐ-Teₓ-Te_{y}O₂, wherein 0<a≤5, 0<x≤3, and 0<y≤2; Li-Te-TeOx, wherein 0<x≤2; Te-ZnOx; wherein 0<x≤2; Liₐ-Teₓ-Zn_{y}O₂, wherein 0<a≤5, 0<x≤3, and 0<y≤2; or Li-Te-ZnOx, wherein 0<x≤2.

In the M¹-M²Oₓ composite, an amount of M²Oₓ may be about 0.05 parts by weight to about 50 parts by weight, based on 100 parts by weight of the total weight of the M¹-M²Oₓ composite. In the M¹-M²Oₓ composite, the amount of M²Oₓ may be about 0.1 parts by weight to about 48 parts by weight, about 1 parts by weight to about 45 parts by weight, or about 5 parts by weight to about 43 parts by weight, based on 100 parts by weight of the total weight of the M¹-M²Oₓ composite. When the amount of M²Oₓ is within the ranges above, a binding force between the solid electrolyte and the anode active material layer may increase, and accordingly, the void formation at high current density during charging and discharging cycles may be suppressed, and the volume changes may be reduced. As a result, the all-solid-state secondary battery having improved rate characteristics and long-lifespan characteristics may be prepared.

In the Li-M¹-M²Oₓ (wherein 0<x≤2) composite, an amount of the lithium may be about 0.01 parts by weight to about 80 parts by weight, based on 100 parts by weight of a total weight of the Li-M¹-M²Oₓ composite, an amount of M¹ may be about 10 parts by weight to about 70 parts by weight, based on 100 parts by weight of the total weight of the Li-M¹-M²Oₓ composite, and an amount of M²Oₓ may be about 0.05 parts by weight to about 50 parts by weight, based on 100 parts by weight of the total weight of the Li-M¹-M²Oₓ composite. When the amounts of Li, M1, and M²Oₓ are within the ranges above, the binding force between the solid electrolyte and the anode active material layer may increase, and accordingly, the void formation at high current density during charging and discharging cycles may be suppressed, and the volume changes may be reduced. As a result, the all-solid-state secondary battery having improved rate characteristics and long-lifespan characteristics may be prepared.

A thickness of the first anode active material layer may be about 10 nanometers (nm) to about 500 nm, and the first anode active material layer may include a plurality of pores (i.e., two or more pores).

Then, a second anode active material may be included in the pores of the first anode active material layer. In one or more embodiments, at least one of the plurality of pores may include the second anode active material disposed therein.

In one or more embodiments, the first anode active material layer may includes a plurality of pores, at least one of the plurality of pores comprises the second anode active material disposed therein, and a porosity of the first anode active material layer is less than the porosity of the first anode active material layer that does not comprise the second anode active material disposed therein, or the first anode active material layer is non-porous by incorporation of the second anode active material. For example, after pressing the all-solid-state secondary battery, the second anode active material included in the second anode active material layer may be provided in at least one of the pores of the first anode active material layer so that porosity of the first anode active material layer may be reduced, or the pores may disappear (i.e., the first anode active material layer may become non-porous by incorporation of the second anode active material in the pores thereof). In one or more embodiments, a size of the plurality of pores in the first anode active material layer may be about 3 nm to about 50 nm. In other words, at least one pore of the plurality of pores may have a size of about 3 nm to about 50 nm.

In the M¹-M²Oₓ composite and the Li-M¹-M²Oₓ composite, the metals M¹ and M² may be selected differently from each other, and the composites may be, for example, Te-SiOₓ, wherein 0<x≤2; or Li-Te-SiOₓ, wherein 0<x≤2.

A metal film may be further included or located between the second anode active material layer and the anode current collector. As such, when the metal film is further included, the all-solid-state secondary battery having improved rate characteristics and long lifespan characteristics may be prepared. Here, a metal included in the film may include at least one of indium, silicon, gallium, tin, aluminum, titanium, zirconium, niobium, germanium, antimony, bismuth, gold, platinum, palladium, magnesium, silver, or zinc.

A lithium film or a lithium alloy film may be further arranged between the second anode active material layer and the anode current collector. Here, the lithium film may be a lithium precipitation layer produced after a charging (i.e., a first charging).

In one or more embodiments, the M¹-M²Oₓ composite in the first anode active material layer may include, for example, Teₓ-Te_{y}O_{z}, wherein 0<x≤3, 0<y≤2, and 0<z≤2; Teₓ-Al_{y}O_{z}, wherein 0<x≤3, 0<y≤2, and 0<z≤2; Seₓ-Se_{y}O_{z}, wherein 0<x≤3, 0<y≤2, and 0<z≤2; Seₓ-Al_{y}O_{z}, wherein 0<x≤3, 0<y≤2, and 0<z≤2; Snₓ-Te_{y}O_{z}, wherein 0<x≤3, 0<y≤2, and 0<z≤2; Teₓ-Sn_{y}O_{z}, wherein 0<x≤3, 0<y≤2, and 0<z≤2; Tiₓ-Te_{y}O_{z}, wherein 0<x≤3, 0<y≤2, and 0<z≤2; or Teₓ-Ti_{y}O_{z}, wherein 0<x≤3, 0<y≤2, and 0<z≤2.

In one or more embodiments, the Li-M¹-M²Oₓ composite in the first anode active material layer may include, for example, Liₐ-Teₓ-Te_{y}O_{Z}, wherein 0<a≤5, 0<x≤3, 0<y≤2, and 0<z≤2; Liₐ-Teₓ-Al_{y}O_{z}, wherein 0<a≤5, 0<x≤3, 0<y≤2, and 0<z≤2; Liₐ-Seₓ-Se_{y}O_{z}, wherein 0<a≤5, 0<x≤3, 0<y≤2, and 0<z≤2; Liₐ-Seₓ-Al_{y}O_{z}, wherein 0<a≤5, 0<x≤3, 0<y≤2, and 0<z≤2; Liₐ-Snₓ-Te_{y}O_{z}, wherein 0<a≤5, 0<x≤3, 0<y≤2, and 0<z≤2; Liₐ-Teₓ-Sn_{y}O_{z}, wherein 0<a≤5, 0<x≤3, 0<y≤2, and 0<z≤2; Liₐ-Tiₓ-Te_{y}O_{z}, wherein 0<a≤5, 0<x≤3, 0<y≤2, and 0<z≤2; or Liₐ-Teₓ-Ti_{y}O_{z}, wherein 0<a≤5, 0<x≤3, 0<y≤2, and 0<z≤2. A thickness of the first anode active material layer may be about 50% or less of a thickness of the cathode active material layer, and may be, for example, about 10 nm to about 500 nm.

The plurality of pores of the first anode active material layer may be formed partially or throughout the first anode active material layer. The plurality of pores may be formed by performing acid treatment, or by using a pore former. Here, a size of the pores may be about 3 nm to about 50 nm, about 3.5 nm to about 45 nm, about 4 nm to about 40 nm, or about 5 nm to about 30 nm. It is to be understood that at least one pore of the plurality of pores may have the specified pores size. The size of the pores may be identified, for example, through a scanning electron microscope (SEM), a transmission electron microscope (TEM), or the like. The term "size of pores" as used herein refers to an average diameter of the pores when the pores are spherical in shape, and refers to an average major axis length of the pores when the pores are non-spherical in shape.

The porosity of the first anode active material may be about 1% to about 90%, for example, about 20% to about 80%. As used herein, the term "porosity" refers to a value obtained by dividing a total pore volume of the first anode active material by an apparent volume of the first anode active material.

The second active material included in the second anode active material layer may be present in at least one of the pores of the first anode active material layer. Even when the second active material is present in at least one of the pores of the first anode active material layer, some of the pores of the first anode active material layer may still exist. In other words, not every pore of the plurality of pores may include the second active material. The second anode active material includes a carbon-containing anode active material, or a carbon-containing anode active material, and at least one of a metallic anode active material or a metalloid anode active material. That is, in one or more embodiments, the second anode active material may include either a carbon-containing anode active material, or the second anode active material may include both a carbon-containing anode active material and at least one of a metallic anode active material or metalloid anode active material.

After pressing the all-solid-state secondary battery during a battery manufacturing process, the second anode active material included in the second anode active material layer may be provided in at least one of the pores of the first anode active material layer so that porosity of the first anode active material layer may be reduced, or the pores may disappear, resulting in a non-porous structure. The second anode active material includes a carbon-containing anode active material, or a combination of a carbon-containing anode active material, and at least one of a metallic anode active material or a metalloid anode active material.

The term "pressed" as used herein refers to a means of pressing an anode/solid electrolyte structure or an anode/solid electrolyte/cathode structure under an applied force.

The first anode active material layer may include a metal or a metal-alloy oxide that reacts with lithium to form a lithium alloy or a lithium compound; lithium oxide including the metal or a metal-alloy; or a combination thereof.

The first anode active material layer may include a metal alloy oxide containing an element present as an ion in a solution having a pH of 7 or less, and an element maintained in a solid state in a solution having a pH of 7 or less. When the first anode active material layer is immersed in an electrolyte having a pH of 7 or less, selective dissolution may occur to prepare the first anode active material layer having a nanoporous structure. Here, the element present as an ion in a solution having a pH of 7 or less may include, for example, Ge, Zn, Zr, Ga, Hf, Nb, In, Si, Cu, V, Cr, Ni, Mn, Fe, Co, Mg, Ca, Sr, or the like, or a combination thereof.

The element maintained in a solid state in a solution having a pH of 7 or less include, for example, Sn, Ag, Al, Ge, Te, Pb, As, Na, Bi, Ti, B, W, Cu, Cr, Zr, Ce or a combination thereof.

The metal alloy oxide may be an oxide including i) Ge, and ii) Te, Se, or a combination thereof.

The metal alloy oxide may include, for example, a Ge-Te-O compound. Here, a mixing molar ratio of Ge and Te may be stoichiometrically controlled in a range in which an alloy may be formed. In one or more embodiments, the mixing molar ratio of Ge to Te may be about 2.5:1 to about 1:500, about 1:1 to about 1:500, about 1:1 to about 1:300, or about 1:1.5 to about 1:100. Based on these mixing polar ratios, for example, pores may be formed in the first anode active material layer by performing an acid treatment thereon.

In one or more embodiments, the mixing molar ratio of Ge to Te may be about 2.5:1 to about 1:500, about 1:1 to about 1:500, about 1:1 to about 1:300, or about 1:1.5 to about 1:100. The mixing molar ratio of Ge to Te may be identified by EDX or XPS. When the mixing molar ratio of Ge to Te is within the ranges above, the all-solid-state secondary battery capable of maintaining high lithium diffusion and having improved rate characteristics and long lifespan characteristics by reducing the interfacial resistance between the anode and the solid electrolyte may be prepared.

The first anode active material layer may be prepared by forming an alloy layer at the interface adjacent to the solid electrolyte, the alloy layer having low fluidity and less agglomeration of particles while maintaining high lithium diffusion during an alloying/dealloying process.

The metal alloy may have low fluidity, and thus the original state thereof may be maintained during multiple charging and discharging cycles. For example, when the first anode active material layer consists of a metal having high fluidity, the metal may move towards the lithium metal during charging. However, the GeTe alloy may maintain an original layer shape thereof even during charging and discharging cycles. Such fluidity tendency increases when the eutectic temperature is low during alloying with lithium. In the case of a Li-Ge alloy or a Li-Te alloy, the eutectic temperature during alloying with lithium may be, for example, greater than or equal to about 600°C, but embodiments are not limited thereto.

Accordingly, the all-solid-state secondary battery including the first anode active material layer including the above-described metal alloy may have reduced the interfacial resistance of a battery cell, thereby improving the high rate characteristics. In addition, when lithium is mainly precipitated at the interface between the second anode active material layer and the anode current collector, the current concentration may be continuously relieved under long-term operation at high current density, thereby improving the lifespan characteristics of the battery cell.

In this regard, the first anode active material layer may be formed of a metal alloy layer having fast lithium diffusion rates and capable of reversibly re-alloying with lithium after an alloying/dealloying process with lithium.

The first anode active material layer may have lithium ion diffusivity that is controlled to be about 1×10⁻¹⁴ square centimeters per second (cm²/sec) or greater at 25°C so that the lithium introduced into the first anode active material layer may move quickly to the second anode active material layer.

In addition, when the acid treatment of the first anode active material layer is performed before the first anode active material layer binds to the second anode active material, the binding force of the first anode active material layer to the second anode active material layer may be further increased. As a result, the all-solid-state secondary battery having a long lifespan may be prepared while maintaining the binding force of the anode to the solid electrolyte during charging and discharging cycles.

In one or more embodiments, the all-solid-state secondary battery may have a structure in which the solid electrolyte, the first anode active material layer, which includes the M¹-M²Oₓ composite, the Li-M¹-M²Oₓ composite, or a combination thereof, the second anode active material layer, and Li, are stacked in the stated order.

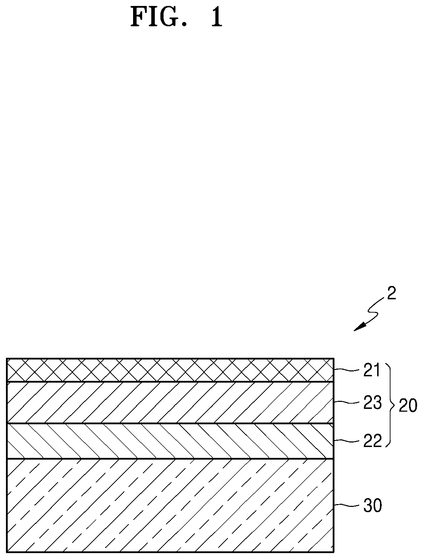

FIG. 1 is a diagram showing a stacked structure of a multi-layered anode structure according to one or more embodiments.

An anode structure 2 includes an anode 20 and a solid electrolyte 30, wherein the anode 20 has a structure in which a first anode active material layer 22 is arranged on an anode current collector 21 and a second anode active material layer 23 is arranged between the anode current collector 21 and the first anode active material layer 22. Pores may be formed in the first anode active material layer 22, and the first anode active material layer 22 may include a metal or a metal alloy, wherein the metal or the metal alloy may react with lithium to form a lithium compound or a lithium alloy.

The lithium ion diffusivity of the first anode active material layer may be about 1×10⁻¹⁴ cm²/sec or greater at 25°C, and may be controlled to be equal to or greater than the lithium ion diffusivity of the second anode active material layer.

Since the first anode active material layer 22 has a high lithium ion diffusivity by having a porous structure with a wide surface area, lithium introduced into the first anode active material layer 22 may move quickly to the second anode active material layer 23, so that local precipitation of lithium inside the first anode active material layer 22 or at the interface between the first anode active material layer 22 and the solid electrolyte 30 may be prevented or minimized. The lithium ion diffusivity of the first anode active material layer 22 at 25°C may be, for example, about 1×10⁻¹⁴ cm²/sec or greater, about 1×10⁻¹³ cm²/sec or greater, about 1×10⁻¹² cm²/sec or greater, about 1×10⁻¹¹ cm²/sec or greater, about 1×10⁻¹⁰ cm²/sec or greater, or about 5×10⁻¹⁰ cm²/sec or greater. The lithium ion diffusivity of the second anode active material layer 23 at 25°C may be, for example, about 1×10⁻¹⁵ cm²/sec or greater, about 1×10⁻¹⁴ cm²/sec or greater, about 1×10⁻¹³ cm²/sec or greater, about 1×10⁻¹² cm²/sec or greater, about 1×10-¹¹ cm²/sec or greater, or about 5×10⁻¹¹ cm²/sec or greater.

The first anode active material layer 22 may include the M¹-M²Oₓ composite, the Li-M¹-M²Oₓ composite, or a combination thereof. In the M¹-M²Oₓ composite, the Li-M¹-M²Oₓ composite, or a combination thereof, the lithium diffusion is high and the fluidity of particles is low, and thus stable interfacial contact may be maintained during charging and discharging cycles at a high rate. In addition, even after a lithium alloying/dealloying process, a phase with rapid lithium diffusion may be maintained.

The first anode active material layer 22 may have a higher reduction potential of lithium ions than the solid electrolyte 30. When the metal alloy included in the first anode active material layer 22 has a higher reduction potential of lithium ions at the time of charging than a solid electrolyte included in the solid electrolyte 30, a reductive decomposition reaction of the solid electrolyte may be suppressed. Accordingly, at the interface between the solid electrolyte 30 and the first anode active material layer 22, the decomposition of the solid electrolyte may be suppressed, and at the same time, the local precipitation of lithium may be suppressed, thereby forming a lithium precipitation layer with a uniform surface. Consequently, the stability of the solid electrolyte 30 during charging and discharging cycles may be increased and the reversible precipitation/dissolution of the lithium precipitation layer may occur, and thus the short circuit of the all-solid-state secondary battery may be suppressed while having improved cycle characteristics.

The reduction potential of lithium ions of the first anode active material layer refers to a potential for the metal or the metal alloy, which reacts with lithium to form a lithium alloy or a lithium compound, to reduce lithium ions to form a lithium-metal alloy such as a solid solution, wherein lithium is a material for forming the first anode active material layer 22. That is, the reduction potential of lithium ions refers to a potential maintained by the metal alloy during charging. In addition, the reduction potential of the solid electrolyte may refer to a potential at which a transition metal included in the solid electrolyte is reduced and a decomposition reaction of the solid electrolyte proceeds. The reduction potential of lithium ions of the first anode active material layer 22 may be, for example, about 0.05 Volts (V) to about 0.6 V (vs. Li⁺/Li). Alternatively, the reduction potential of lithium ions may refer to a reduction potential or a decomposition potential of the solid electrolyte. For example, the reduction potential of LLZO may be about 0.05 V (vs. Li⁺/Li).

A thickness of the first anode active material layer 22 may be about 10 nm to about 500 nm, about 15 nm to about 480 nm, about 20 nm to about 450 nm, about 30 nm to about 420 nm, and for example, about 50 nm to about 300 nm. When the thickness of the first anode active material layer 22 is within the ranges above, an all-solid-state secondary battery having improved resistance and capacity characteristics may be prepared.

The first anode active material layer 22 may be, for example, an inorganic layer that does not include an organic material. When the first anode active material layer 22 is an inorganic layer, a side reaction caused by, for example, an organic material during charging and discharging cycles, may be suppressed.

When the acid treatment of the first anode active material layer 22 is performed, the Ge component of the metal alloy among the components of the first anode active material layer 22 may be mainly removed. As a result, the first anode active material layer may include a Li-Te-Ge compound, a Li-Te compound, a Li-Ge compound, a Li-Te-O compound, a Li-Te-Ge-O compound, or a combination thereof. In the Li-Te-Ge compound and the Li-Te-Ge-O compound, the amount of Ge may be less than that of Te. For example, the amount of Ge may be about 0.1 mole percent (mol%) to about 50 mol%, whereas the amount of Te may be about 20 mol% to about 90 mol%, each based on 100 mol% total. These amounts may be confirmed, for example, by EDX or XPS.

A thickness ratio of the first anode active material layer 22 to the second anode active material layer 23 may be, for example, about 1:50 to about 1:100.

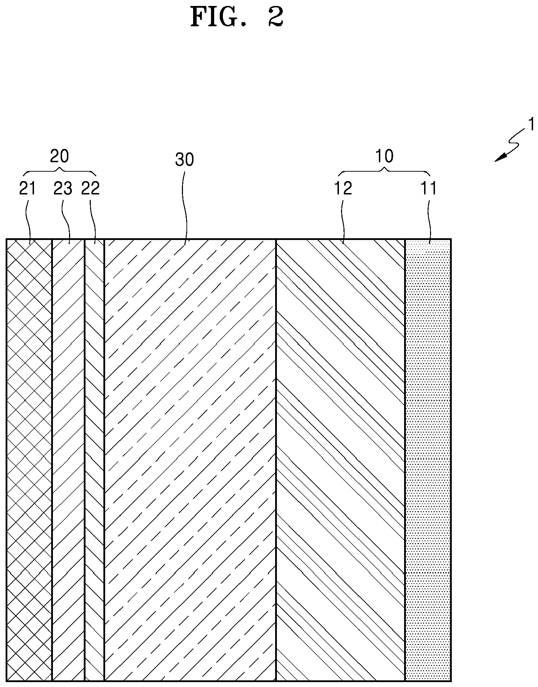

FIG. 2 is a view of a structure of the all-solid-state battery according to one or more embodiments.

Referring to FIG. 2, the all-solid-state battery 1 includes a cathode 10 including a cathode active material layer 12; an anode 20; and a solid electrolyte 30 arranged between the cathode 10 and the anode 20, wherein the anode 20 includes: an anode current collector 21; a first anode active material layer 22 arranged on the anode current collector 21 and in contact with the solid electrolyte 30; and a second anode active material 23 arranged between the anode current collector 21 and the first anode active material layer 22.

The first anode active material layer 22 may include a metal or a metal alloy that reacts with lithium to form a lithium compound or a lithium alloy, and the second anode active material layer 23 may include a carbon-containing anode active material only or a combination of a carbon-containing anode active material and at least one of a metal anode active material or metalloid anode active material.

The lithium ion diffusivity of the first anode active material layer 22 may be controlled to be about 1×10⁻¹⁴ cm²/sec or greater at 25°C. In addition, the lithium ion diffusivity of the first anode active material layer 22 may be controlled to be greater than or equal to that of the second anode active material layer 23.

When the first anode active material layer 22 has high lithium ion diffusivity, lithium introduced into the first anode active material layer 22 may move quickly to the second anode active material layer 23, and accordingly local precipitation of lithium inside the first anode active material layer 22 or at the interface between the first anode active material layer 22 and the solid electrolyte 30, may be prevented or minimized. The lithium ion diffusivity at 25°C of the first anode active material layer 22 may be, for example, about 1×10⁻¹⁴ cm²/sec or greater, about 1×10⁻¹³ cm²/sec or greater, about 1×10⁻¹² cm²/sec or greater, about 1×10⁻¹¹ cm²/sec or greater, about 1×10⁻¹⁰ cm²/sec or greater, or about 5×10⁻¹⁰ cm²/sec or greater. The lithium ion diffusivity at 25°C of the second anode active material layer 23 may be, for example, about 1×10⁻¹⁵ cm²/sec or greater, about 1×10⁻¹⁴ cm²/sec or greater, about 1×10⁻¹³ cm²/sec or greater, about 1×10⁻¹² cm²/sec or greater, about 1×10⁻¹¹ cm²/sec or greater, or about 5×10⁻¹¹ cm²/sec or greater.

In addition, the reduction potential of lithium ions of the composite constituting the first anode active material layer 22 may be controlled to be greater than the reduction potential of lithium ions of the solid electrolyte included in the solid electrolyte 30. A difference between the reduction potential of the lithium ions of the first anode active material layer 22 and the reduction potential of the solid electrolyte may be controlled to be, for example, about 0.01 V or greater, about 0.02 V or greater, about 0.05 V or greater, about 0.1 V or greater, about 0.2 V or greater, or about 0.3 V or greater. When the difference between the reduction potential of the lithium ions of the first anode active material layer 22 and the reduction potential of the solid electrolyte are within the ranges above, the reduction and decomposition reaction of the solid electrolyte may be effectively suppressed during charging and discharging.

The reduction potential of lithium ions of the first anode active material layer 22 with respect to lithium metal may be, for example, about 0.05 V or greater, about 0.1 V or greater, about 0.2 V or greater, about 0.3 V or greater, about 0.4 V or greater, or about 0.5 V or greater. When the first anode active material layer 22 has such high reduction potential of lithium ions, the decomposition of the solid electrolyte may be suppressed. In addition, the reduction potential of the lithium ions of the metal alloy included in the first anode active material layer 22 may be, for example, about 0.05 V or greater, about 0.1 V or greater, about 0.2 V or greater, about 0.3 V or greater, about 0.4 V or greater, or about 0.5 V or greater. When the metal alloy included in the first anode active material layer 22 has such a high reduction potential of lithium ions, the decomposition of the solid electrolyte may be suppressed. The reduction potential or reduction and decomposition potential of the solid electrolyte included in the solid electrolyte 30 with respect to lithium metal may be, for example, about 0.2 V or less, about 0.1 V or less, about 0.09 V or less, about 0.07 V or less, about 0.05 V or less, about 0.03 V or less, about 0.02 V or less, or about 0.01 V or less. When the solid electrolyte has such low reduction potential, solid electrolyte having a wide a wide electrochemically stable voltage window may be provided.

The reduction potential of the first anode active material layer 22 may be greater than that of the second anode active material layer 23. For example, the difference between the reduction potential of the lithium ions of the first anode active material layer 22 and the reduction potential of the lithium ions of the second anode active material layer 23 may be, for example, about 0.01 V or greater, about 0.02 V or greater, about 0.05 V or greater, about 0.1 V or greater, about 0.2 V or greater, or about 0.3 V or greater. Even in the case where the reduction potential of the lithium ions of the second anode active material layer 23 is lower than the reduction potential of the solid electrolyte since the first anode active material layer 22 has higher reduction potential of lithium ions than the second anode active material layer 23, the reduction and decomposition reaction of the solid electrolyte by the second anode active material layer 23 may be effectively suppressed. In addition, a second metal included in the second anode active material layer 23 may be easily selected within a range having lower reduction potential of the lithium ions than the first anode active material layer 22 including a metal alloy. For example, the reduction potential of the lithium ions of the Ge-Te metal alloy may be about 0.05 V to about 0.6 V. For example, the reduction potential of lithium ions having silver (Ag) as the second metal may be about 0.2 V.

Alternatively, the reduction potential of the lithium ions of the first anode active material layer 22 may be lower than the reduction potential of the lithium ions of the second anode active material layer 23. When the reduction potential of the lithium ions of the first anode active material layer 22 is higher than the reduction potential of the solid electrolyte, the reduction potential of the lithium ions of the first anode active material layer 22 may be lower than the reduction potential of the lithium ions of the second anode active material layer 23.

When assembling a battery, the first anode active material layer 22 may include only a metal or a metal alloy, or may include a Li-containing metal or a Li-containing metal alloy layer.

The thicknesses of the first anode active material layer 22 and the second anode active material layer 23 may each independently be, for example, about 50% or less, about 40% or less, about 30% or less, about 20% or less, or about 10% or less, of the thickness of the cathode active material layer 12. When the thickness of the first anode active material layer 22 and/or the second anode active material layer 23 is smaller than that of the cathode active material layer 12, the all-solid-state secondary battery may have improved energy density.

The thickness of the first anode active material layer 22 may be about 10 nm to about 500 nm, about 15 nm to about 480 nm, about 20 nm to about 450 nm, about 30 nm to about 420 nm, or for example, about 50 nm to about 300 nm. In one or more embodiments, the thickness of the second anode active material layer 23 may be, for example, about 1 nm to 100 micrometer (µm), about 10 nm to about 100 µm, about 100 nm to about 10 µm, about 1 µm to about 100 µm, about 5 µm to about 90 µm, about 10 µm to about 80 µm, about 15 µm to about 80 µm, about 20 µm to about 70 µm, about 20 µm to about 55 µm, about 1 nm to about 500 nm, about 10 nm to about 500 nm, about 10 nm to about 400 nm, about 10 nm to about 300 nm, about 10 nm to about 150 nm, or about 10 nm to about 100 nm. When the thicknesses of the first anode active material layer 22 and the second anode active material layer 23 are within the ranges above, a short circuit of the all-solid-state secondary battery may be suppressed, thereby improving the cycle characteristics. The first anode active material layer 22 and/or the second anode active material layer 23 may be arranged by, for example, a vacuum deposition method, a sputtering method, a plating method, or the like, but the method is not limited thereto. Any suitable method capable of forming an anode active material layer may be used.

The second anode active material layer 23 may include, for example, an anode active material in the form of a particle and a binder.

The average particle diameter of the anode active material in the form of particles included in the second anode active material layer 23 may be about 4 µm or less, about 3 µm or less, about 2 µm or less, about 1 µm or less, or about 900 nm or less. The average particle diameter of the anode active material in the form of particles may be, for example, about 10 nm to about 4 µm, about 10 nm to about 2 µm, about 10 nm to about 1 µm, or about 10 nm to about 900 nm. When the anode active material in the form of particles has the average particle diameter within the ranges above, lithium may be further easily subjected to reversible absorbing and/or desorbing during charging and discharging cycles. The average particle diameter of the second anode active material may be, for example, a median diameter (D50) measured by using a laser particle size distribution meter.

The anode active material in the form of particles included in the second anode active material layer 23 may include, for example, i)a carbon-containing anode active material or ii) a carbon-containing anode active material, and at least one of a metal anode active material or a metalloid anode active material.

The carbon-containing anode active material in the form of particles may be, in particular, amorphous carbon. The amorphous carbon may include, for example, at least one of carbon black (CB), acetylene black (AB), furnace black (FB), Ketjen black (KB), graphene, or the like, but is not necessarily limited thereto. Any suitable material available as amorphous carbon in the art may be used. The amorphous carbon may be carbon that does not have crystallinity or has very low crystallinity, and in this regard, may be distinguished from crystalline carbon or graphite-containing carbon.

In the metal anode active material or metalloid anode active material in the form of particles, the metal or metalloid may include, for example, at least one of indium, silicon, gallium, tin, aluminum, titanium, zirconium, niobium, germanium, antimony, bismuth, zinc, gold, platinum, palladium, nickel, iron, cobalt, chromium, magnesium, cerium, cesium, or lanthanum. In the metal or metalloid anode active material in the form of particles included in the second anode active material layer 23, the second metal may include, for example, Au, Pt, Pd, Si, Ag, Al, Bi, Sn, Zn, Fe, Co, Cr, Cs, Ce, sodium (Na), potassium (K), calcium (Ca), yttrium (Y), Bi, tantalum (Ta), hafnium (Hf), barium (Ba), vanadium (V), strontium (Sr), La, or a combination thereof. For example, since Ni does not form an alloy with Li, Ni is not a metal or metalloid anode active material.

The second anode active material layer 23 may include, for example, one type of anode active material or a mixture of a plurality of different types of anode active material in the form of particles, among the anode active material in the form of particles. For example, the first anode active material layer 22 may only include first particles consisting of amorphous carbon, or may further include second particles consisting of at least one metal of In, Si, Ga, Sn, Al, Ti, Zr, Nb, Ge, Sb, Bi, Zn, Au, Pt, Pd, Fe, Co, Cr, Mg, Ce, Cs, or La.

For example, the second anode active material layer 23 may include a mixture of first particles consisting of amorphous carbon, and second particles consisting of at least one metal of In, Si, Ga, Sn, Al, Ti, Zr, Nb, Ge, Sb, Bi, Zn, Au, Pt, Pd, Ni, Fe, Co, Cr, Mg, Ce, Cs, or La. The amount of the second particles may be about 8 wt% to about 60 wt%, about 10 wt% to about 50 wt%, about 15 wt% to about 40 wt%, or about 20 wt% to about 30 wt%, based on a total weight of the mixture of first particle and second particles. When the amount of the second particles is within the ranges above, for example, the cycle characteristics of the all-solid-state secondary battery 1 may be further improved.

For example, the second anode active material layer 23 may include only first particles consisting of amorphous carbon, or further include second particles consisting of at least one second metal of Au, Pt, Pd, Si, Ag, Al, Bi, Sn, or Zn. In one or more embodiments, the second anode active material layer 23 may include a mixture of the first particles consisting of amorphous carbon, and the second particles consisting of a metal of Au, Pt, Pd, Si, Ag, Al, Bi, Sn, or Zn, wherein a mixing ratio of the amorphous carbon to the metal may be, for example, about 10:1 to about 1:2, about 5:1 to about 1:1, or about 4:1 to about 2:1. However, such a mixing ratio is not limited within these ranges, and may be selected according to the required characteristics of the all-solid-state secondary battery 1.

The anode active material included in the second anode active material layer 23 may include, for example, a mixture of the first particles consisting of amorphous carbon and the second particles consisting of a metal or a metalloid. The mixture may be a simple mixture of the first particles and the second particles, or a mixture of the first particles and the second particles that are physically bound together by a binder. The metal or the metalloid may include, for example, at least one of In, Si, Ga, Sn, Al, Ti, Zr, Nb, Ge, Sb, Bi, Au, Pt, Pd, Mg, Pd, Ag, or Zn. The metalloid may be, in other words, a semiconductor element. An amount of the second particle may be about 8 wt% to about 60 wt%, about 10 wt% to about 50 wt%, about 15 wt% to about 40 wt%, or about 20 wt% to about 30 wt%, based on the total weight of the mixture of first particle and second particles. When the amount of the second particle is within the ranges above, the cycle characteristics of the all-solid-state secondary battery may be further improved.

The second anode active material layer 23 may include, for example, a binder. The binder may be, for example, styrene-butadiene rubber (SBR), poly(tetrafluoroethylene), poly(vinylidene fluoride), polyethylene, vinylidene fluoride/hexafluoropropylene copolymer, polyacrylonitrile, poly(methyl methacrylate), or the like, but is not limited thereto. Any suitable material available as a binder may be used. The binder may be used alone, or may be used with a plurality of different binders.

When the second anode active material layer 23 includes the binder, the second anode active material layer 23 may be stabilized on the anode current collector 21. In addition, despite a change in volume and/or relative position of the second anode active material layer 23 during charging and discharging, cracking of the second anode active material layer 23 may be suppressed. For example, when the second anode active material layer 23 does not include the binder, the second anode active material layer 23 may be easily separated from the anode current collector 21. A portion where the second anode active material layer 23 is separated from the anode current collector 21 may expose the anode current collector 21, and thus when the anode current collector 21 is in direct contact with the solid electrolyte 30, the possibility of occurrence of a short circuit may increase. The second anode active material layer 23 may be prepared by, for example, coating the anode current collector 21 with a slurry in which a material constituting the second anode active material layer 23 is dispersed, and drying the coated anode current collector 21. When the binder is included in the second anode active material layer 23, the anode active material may be stably dispersed in the slurry. For example, when the slurry is applied on the anode current collector 21 by a screen printing method, clogging of the screen (for example, clogging by an agglomerate of the anode electrode active material) may be suppressed.

The anode current collector 21 may be formed of, for example, a material that does not react with lithium, in other words, a material that forms neither an alloy with lithium nor a compound with lithium. A material for forming the anode current collector 21 may be, for example, copper (Cu), stainless steel, Ti, Fe, Co, Ni, or the like, but is not limited thereto. Any suitable material available as an electrode current collector may be used. The anode current collector 21 may be formed of one of the above-described metals, or an alloy or coating material of two or more metals. The anode current collector 21 may be, for example, in the form of a plate or a foil.

The second anode active material layer 23 may further include one or more additives, for example, a filler, a dispersant, an ion conductive agent, or the like, as used in a conventional all-solid-state battery.

The thickness of the first anode active material layer 22 including the anode active material in the form of particles and/or the thickness of the second anode active material layer 23 may be, for example, about 50% or less, about 40% or less, about 30% or less, about 20% or less, or about 10% or less, of the thickness of the cathode active material layer 12. When the thickness of the first anode active material layer 22 and/or the second anode active material layer 23 is smaller than that of the cathode active material layer 12, the all-solid-state secondary battery 1 may have improved energy density.

In the all-solid-state secondary battery 1, for example, a third anode active material layer (not shown) may be arranged between the anode current collector 21 and the second anode active material layer 23 or between the first anode active material layer 22 and the second anode active material layer 23. The third anode active material layer may be a metal layer including lithium or a lithium alloy. The metal layer may include lithium or a lithium alloy. The third anode active material layer may be formed by a charging. Therefore, the third anode active material layer which is a metal layer including lithium may serve as, for example, a lithium reservoir. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto. Any suitable material alloyable with lithium may be used. The third anode active material layer may consist of lithium, one of the alloys above, or several kinds of alloys.

A thickness of the third anode active material layer is not particularly limited, but may be, for example, about 1 µm to about 1,000 µm, about 1 µm to about 500 µm, about 1 µm to about 200 µm, about 1 µm to about 150 µm, about 1 µm to about 100 µm, or about 1 µm to about 50 µm. When the thickness of the third active material layer 25 is within the ranges above, the cycle characteristics of the all-solid-state secondary battery 1 may be improved while the third active material layer serves as a lithium reservoir. The third active material layer may be, for example, a metal foil having a thickness within the ranges above.

In the all-solid-state secondary battery 1, the third anode active material layer 25 may be, for example, arranged between the anode current collector 21 and the second anode active material layer 23 or between the first anode active material layer 22 and the second anode active material layer 23, before assembling the all-solid-state secondary battery 1. In one or more embodiments, in the all-solid-state secondary battery 1, the third anode active material layer may be, for example, precipitated between the anode current collector 21 and the second anode active material layer 23, or between the anode active material layer 22 and the second anode active material layer 23, by charging after the assembly of the all-solid-state secondary battery 1.

When the third anode active material layer is arranged between the anode current collector 21 and the second anode active material layer 23, or between the anode active material layer 22 and the second anode active material layer 23, before the assembly of the all-solid-state secondary battery 1, the third anode active material layer, which is a metal layer including lithium, may serve as a lithium reservoir. Accordingly, the cycle characteristics of the all-solid-state secondary battery 1 including the third anode active material layer may be further improved. For example, before the assembly of the all-solid-state secondary battery 1, a lithium foil may be arranged between the anode current collector 21 and the second anode active material layer 23, or between the first anode active material layer 22 and the second anode active material layer 23.

When the third anode active material layer is arranged by charging after assembly of the all-solid-state secondary battery 1, the third anode active material layer is not included at the time of the assembly of the all-solid-state secondary battery 1, and thus the energy density of the all-solid-state battery 1 may increase. For example, when the all-solid-state secondary battery 1 is charged, the charging capacity of the first anode active material layer 22 and the second anode active material layer 23 may be exceeded. That is, the first anode active material layer 22 and the second anode active material layer 23 may be overcharged. At the initial stage of charging, lithium may be absorbed in the first anode active material layer 22 and the second anode active material layer 23. That is, the anode active materials included in the first anode active material layer 22 and the second anode active material layer 23 may form an alloy or compound with lithium ions that have migrated from the cathode 10. When the first anode active material layer 22 and the second anode active material layer 23 are charged beyond the capacity thereof, for example, lithium may be precipitated on the rear surface of the second anode active material layer 23, i.e., between the anode current collector 21 and the second anode active material layer 23. Then, due to the precipitated lithium, a metal layer corresponding to the third anode active material layer may be formed. Alternatively, when the first anode active material layer 22 and the second anode active material layer 23 are charged beyond the capacity thereof, for example, lithium may be precipitated on the front surface of the second anode active material layer 23, i.e., between the first anode active material layer 22 and the second anode active material layer 23. Then, due to the precipitated lithium, a metal layer corresponding to the third anode active material layer may be formed. The third anode active material layer may be a metal layer mainly including lithium (i.e., lithium metal). Such a result may be obtained, for example, when the anode active materials included in the first anode active material layer 22 and the second anode active material layer 23 consist of a material that forms an alloy or a compound with lithium. At the time of discharging, lithium included in the first anode active material layer 22, the second anode active material layer 23, and the third anode active material layer which is a metal layer, may be ionized and move toward the cathode 10. Therefore, lithium may be used as the anode active material in the all-solid-state secondary battery 1. In addition, the first anode active material layer 22 and/or the second anode active material layer 23 coats the third anode active material layer, the third anode active material layer 25 which is a metal layer may serve as a protective layer and serve to suppress the precipitation growth of lithium dendrites at the same time. Therefore, the short circuit and the capacity degradation of the all-solid-state secondary battery 1 may be suppressed, thereby improving the cycle characteristics of the all-solid-state secondary battery 1.

The thickness of the first anode active material layer 22 may be, for example, about 5% to about 150%, about 10% to about 120%, about 20% to about 100%, about 30% to about 80%, or about 33% to about 66%, with respect to the thickness of the third anode active material layer in a state after charging. When the first anode active material layer 22 is too thin, the function of the first anode active material layer 22 may not be appropriately performed. When the first anode active material layer 22 is too thick, the energy density of the all-solid-state secondary battery 1 may be reduced.

In addition, when the third active material layer is arranged by charging after the assembly of the all-solid-state secondary battery 1, the anode current collector 21, the first anode active material layer 22, the second anode active material layer 23, and region therebetween may be, for example, lithium metal-free layers or regions that do not include lithium metal in an initial state or a post-discharge state of the all-solid-state secondary battery 1.

### Solid Electrolyte

Referring to FIGS. 1 and 2, the solid electrolyte 30 may include a solid electrolyte arranged between the cathode 10 and the anode 20.

The solid electrolyte may include, for example, an oxide-containing solid electrolyte, a sulfide-containing solid electrolyte, or a combination thereof. The oxide-containing solid electrolyte may include one or more of Li_{1+x+y}AlₓTi₂₋ₓSi_{y}P_{3-y}O₁₂, wherein 0<x<2 and 0≤y<3; BaTiOs; Pb(ZrₐTi₁₋ₐ)O₃, wherein 0≤a≤1 (PZT); Pb₁₋ₓLaₓZr_{1-y}Ti_{y}O₃, wherein 0≤x<1 and 0≤y<1 (PLZT); PB(Mg₃Nb_{2/3})O₃-PbTiO₃(PMN-PT); HfO₂; SrTiO₃; SnO₂; CeO₂; Na₂O; MgO; NiO; CaO; BaO; ZnO; ZrO₂; Y₂O₃; Al₂O₃; TiO₂; SiO₂; Li₃PO₄; LiₓTi_{y}(PO₄)₃, wherein 0<x<2 and 0<y<3; LiₓAl_{y}Ti_{z}(PO₄)₃, wherein 0<x<2, 0<y<1, and 0<z<3; Li_{1+x+y}(AlₐGa₁₋ₐ)ₓ(Ti_{b}Ge_{1-b})₂₋ₓSi_{y}P_{3-y}O₁₂, wherein 0≤x≤1, 0≤y≤1, 0≤a≤1, and 0≤b≤1, LiₓLa_{y}TiO₃, wherein 0<x<2 and 0<y<3; Li₂O; LiOH; Li₂CO₃. LiAlO₂; Li₂O-Al₂O₃-SiO₂-P₂O₅-TiO₂-GeO₂; or Li₃₊ₓLa₃M₂O₁₂, wherein M is Te, Nb, or Zr, and x is an integer from 1 to 10. The solid electrolyte may be prepared by a sintering method, or the like. For example, the oxide-containing solid electrolyte may include a garnet-type solid electrolyte that is Li₇La₃Zr₂O₁₂ (LLZO) and/or Li₃₊ₓLa₃Zr₂₋ₐMₐO₁₂ (M-doped LLZO, M is Ga, W, Nb, Ta, or Al, and x is an integer from 1 to 10, 0.05≤a≤0.7).

Alternatively, the solid electrolyte may include, for example, a sulfide-containing solid electrolyte. The sulfide-containing solid electrolyte may include, for example, one or more of Li₂S-P₂S₅, Li₂S-P₂S₅-LiX, wherein X is a halogen, Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCI; Li₂S-SiS₂-B₂S₃-LiI; Li₂S-SiS₂-P₂S₅-LiI; Li₂S-B₂S₃; Li₂S-P₂S₅-ZₘSₙ, wherein m and n are positive numbers, and Z is one of Ge, Zn, or Ga; Li₂S-GeS₂; Li₂S-SiS₂-Li₃PO₄; Li₂S-SiS₂-LiₚMO_{q}, wherein p and q are positive numbers, and M is one of P, Si, Ge, B, Al, Ga, or In; Li₇₋ₓPS₆₋ₓClₓ, wherein 0<x<2; Li₇₋ₓPS₆₋ₓBrₓ, wherein 0<x<2; or Li₇₋ₓPS₆₋ₓIₓ, wherein 0<x<2. The sulfide-containing solid electrolyte may be, for example, prepared by treating a starting material, such as Li₂S, P₂S₅, or the like) by a melting quenching method or a mechanical milling method, but embodiments are not limited thereto. Also, after such treatment, heat treatment may be performed. The sulfide-containing solid electrolyte may be amorphous or crystalline, or may be in a mixed state.

In addition, the sulfide-containing solid electrolyte may include, for example, S, P, and Li, as at least constituent elements of the above-described sulfide-containing solid electrolyte material. For example, the sulfide-containing solid electrolyte may be a material including Li₂S-P₂S₅. When Li₂S-P₂S₅ is included as the sulfide-containing solid electrolyte material, a mixing molar ratio of Li₂S to P₂S₅ (Li₂S:P₂S₅) may be, for example, about 50:50 to about 90:10.

The sulfide-containing solid electrolyte may include a compound having an argyrodite crystal-type structure. The compound having an argyrodite-type crystal structure may include, for example, one or more of Li₇₋ₓPS₆₋ₓClₓ, wherein 0<x<2; Li₇₋ₓPS₆₋ₓBrₓ, wherein 0<x<2; or Li₇₋ₓPS₆₋ₓIₓ, wherein 0<x<2. In particular, the sulfide-containing solid electrolyte included in the solid electrolyte may be an argyrodite-type compound including one or more of Li₆PS₅Cl, Li₆PS₅Br, or Li₆PS₅I.

The solid electrolyte 30 may further include, for example, a binder. The binder included in the solid electrolyte 30 may be, for example, SBR, poly(tetrafluoroethylene), poly(vinylidene fluoride), polyethylene, or the like, or a combination thereof, but is not limited thereto. Any suitable material available as a binder may be used. The binder included in the solid electrolyte 30 may be the same as or different from the binders included in the cathode active material layer 12 and the first anode active material layer 22.

### Cathode

The cathode 10 may include a cathode current collector 11 and a cathode active material layer 12.

The cathode current collector 11 may be, for example, in the form of a plate or a foil, each including In, Cu, Mg, stainless steel, Ti, Fe, Co, Ni, Zn, Al, Ge, Li, or an alloy thereof. The cathode current collector 11 may be omitted.
the cathode active material layer 12 may include, for example, a cathode active material.

The cathode active material may be capable of reversibly absorbing or desorbing lithium ions. The cathode active material may include, for example, a lithium transition metal oxide, such as lithium cobalt oxide (LCO), a lithium nickel oxide, a lithium nickel cobalt oxide, a lithium nickel cobalt aluminum oxide (NCA), a lithium nickel cobalt manganese oxide (NCM), a lithium manganate, a lithium iron phosphate, or the like, a nickel sulfide, a copper sulfide, a lithium sulfide, an iron oxide, a vanadium oxide, or the like, but embodiments are not limited thereto. Any suitable material available as the cathode active material may be used. The cathode active material may be used alone or in a combination of two or more materials.

The lithium transition metal oxide may be, for example, a compound represented by one of LiₐA_{1-b}B_{b}D₂, wherein 0.90 ≤ a ≤ 1, and 0 ≤ b ≤ 0.5; LiₐE_{1-b}B_{b}O_{2-c}D_{c}, wherein 0.90 ≤ a ≤ 1, 0 ≤ b ≤ 0.5, and 0 ≤ c ≤ 0.05; LiE_{2-b}B_{b}O_{4-c}D_{c}, wherein 0 ≤ b ≤ 0.5, and 0 ≤ c ≤ 0.05; LiₐNi_{1-b-c}Co_{b}B_{c}D_{α}, wherein 0.90 ≤ a ≤ 1, 0 ≤ b ≤ 0.5, 0 ≤ c ≤ 0.05, and 0 < α ≤ 2; LiₐNi_{1-b-c}Co_{b}B_{c}O_{2-α}F_{α}, wherein 0.90 ≤ a ≤ 1, 0 ≤ b ≤ 0.5, 0 ≤ c ≤ 0.05, and 0 < α < 2; LiₐNi_{1-b-c}Co_{b}B_{c}O_{2-α}F₂, wherein 0.90 ≤ a ≤ 1, 0 ≤ b ≤ 0.5, 0 ≤ c ≤ 0.05, and 0 < α < 2; LiₐNi_{1-b-c}Mn_{b}B_{c}D_{α}, wherein 0.90 ≤ a ≤ 1, 0 ≤ b ≤ 0.5, 0 ≤ c ≤ 0.05, and 0 < α ≤ 2; LiₐNi_{1-b-c}Mn_{b}B_{c}O_{2-α}F_{α}, wherein 0.90 ≤ a ≤ 1, 0 ≤ b ≤ 0.5, 0 ≤ c ≤ 0.05, and 0 < α < 2; LiₐNi_{1-b-c}Mn_{b}B_{c}O_{2-α}F₂, wherein 0.90 ≤ a ≤ 1, 0 ≤ b ≤ 0.5, 0 ≤ c ≤ 0.05, and 0 < α < 2; LiₐNi_{b}E_{c}G_{d}O₂, wherein 0.90 ≤ a ≤ 1, 0 ≤ b ≤ 0.9, 0 ≤ c ≤ 0.5, and 0.001 ≤ d ≤ 0.1; LiₐNi_{b}Co_{c}Mn_{d}GeO₂, wherein 0.90 ≤ a ≤ 1, 0 ≤ b ≤ 0.9, 0 ≤ c ≤ 0.5, 0 ≤ d ≤0.5, and 0.001 ≤ e ≤ 0.1; LiₐNi_{b}Co_{c}Mn_{d}GeO₂, wherein 0.90 ≤ a ≤ 1, 0 ≤ b ≤ 0.9, 0 ≤ c ≤ 0.5, 0 ≤ d ≤0.5, and 0.001 ≤ e ≤ 0.1; LiₐNiG_{b}O₂, wherein 0.90 ≤ a ≤ 1, and 0.001 ≤ b ≤ 0.1; LiₐCoG_{b}O₂, wherein 0.90 ≤ a ≤ 1, and 0.001 ≤ b ≤ 0.1; LiₐMnG_{b}O₂, wherein 0.90 ≤ a ≤ 1, and 0.001 ≤ b ≤ 0.1; LiₐMn₂G_{b}O₄, wherein 0.90 ≤ a ≤ 1, and 0.001 ≤ b ≤ 0.1; QO₂; QS₂; LiQS₂; V₂O₅; LiV₂O₅; LiIO₂; LiNiVO₄; Li_{(3-f)}J₂(PO₄)₃, wherein 0 ≤ f ≤ 2; Li_{(3-f)}Fe₂(PO₄)₃, wherein 0 ≤ f ≤ 2; or LiFePO₄. In the compound represented by one of the formulae above, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A coating layer may be also added to the surface of the compound described above, and a mixture of the compound described above and a compound having a coating layer may be also used. Such a coating layer added to the surface of the compound described above may include, for example, a coating element compound such as an oxide of a coating element, a hydroxide of a coating element, an oxyhydroxide of a coating element, an oxycarbonate of a coating element, or a hydroxy carbonate of a coating element. Such a coating element compound constituting the coating layer may be amorphous or crystalline. The coating element included in the coating layer may include Mg, Al, Co, K, Na, Ca, Si, Ti, V, Sn, Ge, Ga, B, As, Zr, or a combination thereof. A method of forming the coating layer may be selected within a range that does not adversely affect the physical properties of the cathode active material. A coating method may include, for example, spray coating, dipping, or the like, but embodiments are not limited thereto. A specific coating method is well understood by those skilled in the art, and thus a detailed description thereof will be omitted.

The cathode active material may include, for example, a lithium salt of a transition metal oxide having a layered rock salt type structure, among the lithium transition metal oxides described herein. The term "layered rock salt type structure" as used herein refers to, for example, a structure in which oxygen atomic layers and metal layers are alternately arranged regularly in the <111> direction of a cubic rock salt type structure to form a two-dimensional plane by each of the atomic layers. The term "cubic rock salt type structure" as used herein refers to a NaCl type structure which is one type of crystal structures, and in detail, may refer to a structure in which a face centered cubic lattice (fcc) formed by respective anions and cations is misaligned from each other by 1/2 of the ridge of a unit lattice. The lithium transition metal oxide having such a layered rock salt type may include, for example, a ternary lithium transition metal oxide such as LiNiₓCo_{y}Al_{z}O₂ (NCA) (where 0 < x < 1, 0 < y < 1, 0 < z < 1, and x + y + z = 1) or LiNiₓCo_{y}Mn_{z}O₂ (NCM) (where 0 < x < 1, 0 < y < 1, 0 < z < 1, and x + y + z = 1). When the cathode active material includes a ternary lithium transition metal oxide having a layered rock salt type, the all-solid-state secondary battery may have further improved energy density and thermal stability.

The cathode active material may be covered by the coating layer as described herein. For use as the coating layer, any suitable coating layer known for a cathode active material of an all-solid-state secondary battery may be used. The coating layer may be, for example, Li₂O-ZrO₂ or the like.

When the cathode active material includes, for example, Ni as the ternary lithium transition metal oxide such as NCA or NCM, the volume density of the all-solid-state secondary battery may increase so that the metal elution of the cathode active material may be reduced in a charged state. Consequently, the cycle characteristics of the all-solid-state secondary battery may be improved.

The cathode active material may be in the form of, for example, a globular shape or an oval-sphere shape. A particle diameter of the cathode active material is not particularly limited and may be within a range applicable to a conventional all-solid secondary battery. The amount of the cathode active material in the cathode 10 is not particularly limited and may be within a range applicable to a cathode of a conventional all-solid-state battery.

The cathode 10 may further include, in addition to the cathode active material, one or more additives such as a conductive material, a binder, a filler, a dispersant, an ion conductive auxiliary agent, or the like. The conductive material may include, for example, at least one of graphite, carbon black, acetylene black, Ketjen black, carbon fiber, metal powder, or the like. The binder may include, for example, at least one of SBR, poly(tetrafluoroethylene), poly(vinylidene fluoride), polyethylene, or the like. For use as a filler, a dispersant, an ion conductive auxiliary agent, or the like that is blendable into the cathode 10, any suitable material generally used for a solid secondary battery may be used.

The cathode 10 may further include a solid electrolyte. The solid electrolyte included in the cathode 10 may be similar to or different from the solid electrolyte included in the solid electrolyte 30. Details on the solid electrolyte may be understood by referring to the solid electrolyte 30.

The solid electrolyte included in the cathode 10 may include, for example, an oxide-containing solid electrolyte, a sulfide-containing solid electrolyte, or a combination thereof. For use as the sulfide-containing solid electrolyte and the oxide-containing solid electrolyte, the sulfide-containing solid electrolyte and the oxide-containing solid electrolyte used for the solid electrolyte may be used.

In one or more embodiments, the cathode 10 may be, for example, impregnated with a liquid electrolyte. The liquid electrolyte may include a lithium salt and one or more of an ionic liquid or a polymer ionic liquid. The liquid electrolyte may be non-volatile. The ionic liquid may have a melting point that is less than room temperature, and may refer to a salt in a liquid state at room temperature or a molten salt at room temperature, each consisting of only ions. The ionic liquid may include a) one or more cations that are an ammonium cation, a pyrrolidinium cation, a pyridinium cation, a pyrimidinium cation, an imidazolium cation, a piperidinium cation, a pyrazolium cation, an oxazolium cation, a pyridazinium cation, a phosphonium cation, a sulfonium cation, a triazolium cation, or a combination thereof; or b) one or more anions that are BF₄⁻, PF₆⁻, AsF₆₋, SbF₆⁻, AlCl₄⁻, HSO₄⁻, ClO₄⁻, CH₃SO₃⁻, CF₃CO₂⁻, Cl⁻, Br-, I⁻, SO₄⁻, CF₃SO₃⁻, (FSO₂)₂N⁻, (C₂F₅SO₂)₂N⁻, (C₂F₅SO₂)(CF₃SO₂)N⁻, or (CF₃SO₂)₂N⁻. The ionic liquid may include one or more of, for example, N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)imide, or 1-ethyl-3-methylimidazolium bis(trifluoromethylsulfonyl)imide. The polymer ionic liquid may include a repeating unit including: a) one or more cations that are an ammonium cation, a pyrrolidinium cation, a pyridinium cation, a pyrimidinium cation, an imidazolium cation, a piperidinium cation, a pyrazolium cation, an oxazolium cation, a pyridazinium cation, a phosphonium cation, a sulfonium cation, a triazolium cation, or a combination thereof; and b) one or more anions that are BF₄⁻, PF₆⁻, AsF₆⁻, SbF₆-, AlCl₄⁻, HSO₄⁻, ClO₄⁻, CH₃SO₃⁻, CF₃CO₂⁻, (CF₃SO₂)₂N⁻, (FSO₂)₂N⁻, Cl⁻, Br⁻, I⁻, SO₄²⁻, CF₃SO₃⁻, (C₂F₅SO₂)₂N⁻, (C₂F₅SO₂)(CF₃SO₂)N⁻, NO₃⁻, Al₂Cl₇⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, or (O(CF₃)₂C₂(CF₃)₂O)₂PO⁻. For use as the lithium salt, any suitable material available as a lithium salt may be used. The lithium salt may include, for example, LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF₂ₓ₊₁SO₂)(C_{y}F_{2y+1}SO₂) (where x and y are natural numbers), LiCl, Lil, or a combination thereof. The lithium salt included in the liquid electrolyte may have a concentration of about 0.1 molar (M) to about 5 M. An amount of the liquid electrolyte impregnated in the cathode 10 may be, based on 100 parts by weight of the cathode active material layer 12 not including the liquid electrolyte, about 0 parts by weight to about 100 parts by weight, about 0 parts by weight to about 50 parts by weight, about 0 parts by weight to about 30 parts by weight, about 0 parts by weight to about 10 parts by weight, or about 0.1 parts by weight to about 5 parts by weight.

The all-solid-state secondary battery according to one or more embodiments may be prepared by the steps of providing the solid electrolyte; arranging the first anode active material layer on a surface of the solid electrolyte; forming a plurality of pores in the first anode active material layer to form a porous first anode active material layer; arranging the anode current collector on the porous first anode active material layer, wherein a second anode active material is arranged on the anode current collector; and arranging the cathode active material layer on an opposite surface of the solid electrolyte.

If the first anode active material layer is arranged adjacent to the solid electrolyte, and includes: a Li-M¹-M²Oₓ composite, the step of arranging a first anode active material layer on a surface of the solid electrolyte may be performed by arranging a first anode active material layer precursor on a surface of the solid electrolyte.

The first negative electrode active material layer precursor disposed on the solid electrolyte layer may be converted into the first negative electrode active material layer after charging and discharging.

The forming of the plurality of pores in the first anode active material layer may be performed by acid treatment of the first anode active material layer or by treatment of the first anode active material layer by using a pore former. When the acid treatment is performed, the first anode active material layer may have a porous structure with an increased surface area so that the diffusion and movement of lithium ions toward the second anode active material layer may increase, thereby improving the binding force between the solid electrolyte and the first anode active material layer.

For use as the pore former, any suitable material capable of forming pores in the first anode active material layer may be used. For example, the pore former may include at least one of polyvinyl pyrrolidone (PVP), polyethylene glycol, polyvinyl alcohol, diethylglycol, polymethyl methacrylate (PMMA), or triethylene glycol.

The arranging of the first anode active material layer on one surface of the solid electrolyte may be performed by stacking the first anode active material layer formed on a substrate on the solid electrolyte. The first anode active material layer may be formed on the substrate by deposition such as sputtering, drop coating, spray coating, or solution infiltration in an oxidizing gas atmosphere. The deposition may be, for example, accomplished by physiochemical vapor deposition. The oxidizing gas atmosphere may include an oxygen atmosphere or air atmosphere.

The deposition may include sputtering, pulsed laser deposition (PLD), molecular beam epitaxy (MBE), ion plating, ion beam deposition, or the like.

When the deposition is carried out by sputtering, the sputtering may include, for example, DC sputtering, radio frequency (RF) sputtering, magnetron sputtering, bias sputtering, or reactive sputtering, but embodiments are not limited thereto. In one or more embodiments, RF sputtering may be used.

When the first anode active material layer is arranged on the surface of the solid electrolyte, the first anode active material layer may include an oxide of the metal alloy, such as an oxide of a GeₓTe_{y} alloy (wherein 0<x≤2 and 0<y≤1.5) or an oxide of a GeₓTe_{y} alloy (wherein 0<x≤1 and 0<y≤1).

Regarding the oxide of the metal alloy, the metal alloy may include at least one of Ge₁Te₁, Ge_{0.35}Te_{0.65}(Ge_{0.7}Te_{1.3}), Ge_{0.5}Te₁(Ge₁Te₂), Ge_{0.54}Te₁(Ge_{1.08}Te₂), Ge_{0.6}Te₁(Ge_{1.2}Te₂), Ge_{0.65}Te₁(Ge_{1.3}Te₂), Ge_{0.7}Te₁(Ge_{1.4}Te₂), Ge_{0.75}Te₁(Ge_{1.5}Te₂), Ge_{0.8}Te₁(Ge_{1.6}Te₂), Ge_{0.85}Te₁(Ge_{1.7}Te₂), Ge_{0.9}Te₁(Ge_{1.8}Te₂), Ge_{0.95}Te₁(Ge_{1.9}Te₂), and Ge₂Te₃.

The mixing molar ratio of the first metal to the second metal in the metal alloy may be about 1:1 to about 1:500, about 1:1 to about 1:300, about 1:1 to about 1:200, about 1:5 to about 1:180, about 1:8 to about 1:100, or about 1:1.85 to about 1:50.

The metal alloy may include, for example, a GeTe binary alloy. In this regard, the metal alloy may have low fluidity compared to monometallic metal such as silver, and thus may maintain stable interfacial contact during high-rate charging and discharging. Even after alloying/dealloying with lithium, a phase (rhombohedral structure) having rapid lithium diffusion may be maintained, so that the metal alloy may not serve as a kinetic barrier. When the first anode active material layer includes the above-mentioned metal alloy, the short circuit of the all-solid-state secondary battery may be prevented, thereby improving the cycle characteristics of the all-solid-state secondary battery.

When the metal alloy layer includes a Ge-Te alloy, the molar ratio of Ge to Te may be in about 2.5:1 to about 1:500, about 1:1 to about 1:500, about 1:1 to about 1:300, about 1:1 to about 1:200, about 1:5 to about 1:180, about 1:8 to about 1:150, or about 1:10 to about 1:130, before performing the acid treatment. In addition, after performing the acid treatment, the molar ratio of Ge to Te in the Ge-Te alloy may be 0:1.. For example, after performing the acid treatment, the molar ratio of Ge to Te in the Ge-Te alloy may be about 1:1.5 to about 1:100, about 1:5 to about 1:50, about 1:7 to about 1:30, or about 1:8 to about 1:20.

The substrate is not particularly limited, and for example, various supports including a base, an anode electrode, or the like may be used depending on a manufacturing process.

The conditions for the sputtering process may include RF power of about 300 watts (W) to about 500 W, a power density of about 2.5 watts per square centimeter (W/cm²) to about 2.6 W/cm², a working pressure of about 3 mTorr to about 9 mTorr, and nitrogen or argon gas as plasma gas. In addition, the growth rate at which the first anode active material layer may be formed on the substrate may be controlled to be in a range of about 0.3 angstroms per second (Å/sec) to about 0.4 Å/sec. In addition, the distance between the sputter target and the substrate may be about 50 nm to about 120 nm, and a deposition time may be about 100 minutes (min) to about 1,000 min.

When the conditions for the sputtering process are within the ranges above, a dense first anode active material layer may be formed. For example, when the conditions for the sputtering process are within the ranges above, a dense first anode active material layer in an amorphous or crystalline state may be formed.

After performing the sputtering, the heat treatment may not be performed. In one or more embodiments, after performing the sputtering, a heat treatment may be performed.

In one or more embodiments, after performing the sputtering, the heat treatment may be further performed at 400°C or less, or at a temperature of about 100°C to about 400°C, for example, about 200°C to about 400°C. As such, when the heat treatment is further performed, the content of the crystalline phase in the first anode active material layer may be increased.

After the first anode active material layer is arranged on a surface of the solid electrolyte, the heat treatment may be further performed thereon at a temperature of about 200°C to about 400°C. As such, when the heat treatment is further performed, the crystallinity of the metal alloy may be further improved.

When the first anode active material layer is formed as described above, lithium ions may move smoothly.

When the first anode active material layer 22 and the second anode active material layer 23 are sequentially arranged on the solid electrolyte 30, the short circuit of the all-solid-state secondary battery 1 may be suppressed, thereby improving the cycle characteristics of the all-solid-state secondary battery 1. The all-solid-state secondary battery 1 may be prepared in a way that, for example, the solid electrolyte 30 on which the first anode active material layer 22 and the second anode active material layer 23 are sequentially stacked and the cathode 10 are each prepared first, and then stacked.

### Preparation of Laminate of Solid Electrolyte/Anode

The first anode active material layer may be prepared by coating the metal alloy on a surface of the solid electrolyte according to a sputtering method, a vacuum deposition method, a coating method, or the like. Alternatively, the first anode active material layer may be prepared by arranging a foil of the metal alloy on one surface of the solid electrolyte and pressing the resultant. The pressing may include, for example, roll pressing, flat pressing, warm isotactic pressing (WIP), cold isotactic pressing (CIP), or the like, but is not particularly limited thereto. Any suitable pressing method available may be used. The pressure applied during the pressing may be, for example, about 50 megapascal (MPa) to about 500 MPa. The time for which the pressing is applied may be about 5 milliseconds (ms) to about 10 min. The pressing may be, for example, performed at a temperature of about room temperature to about 90°C, or about 20°C to about 90°C. Alternatively, the pressing may be performed at a high temperature of about 100°C or greater. The second anode active material layer may be prepared in the same manner as in the first anode active material layer, except that the second metal may be used. By arranging the anode current collector on the second anode active material layer and then pressing the resultant, a laminate of solid electrolyte 30/anode 20 may be prepared. The pressing may include, for example, roll pressing, flat pressing, or the like, but is not limited thereto. Any pressing method available in the art may be used. The pressure applied during the pressing may be, for example, in a range of about 50 MPa to about 500 MPa. The time for which the pressing is applied may be in a range of about 5 ms to about 10 min. The pressing may be, for example, performed at a temperature in a range of about room temperature to about 90°C or about 20°C to 90°C. Alternatively, the pressing may be performed at a high temperature of 100°C or greater.

Alternatively, the second anode active material layer 23 may be prepared by using a slurry for the second anode active material.

For example, the slurry may be prepared by adding components constituting the second anode active material layer 23, such as a particle of the carbon-containing anode active material, a binder, or the like, to a polar solvent or a non-polar solvent. The prepared slurry may be applied onto the first anode active material layer 22 of the first laminate of solid electrolyte 30/first anode active material layer 22, and then dried to prepare a second laminate. Next, the anode current collector 21 may be arranged on the dried second laminate, and the pressing may be applied thereto as described herein, thereby preparing a laminate of solid electrolyte 30/anode 20.

### Preparation of Cathode

A slurry may be prepared by adding materials constituting the cathode active material layer 12, such as a cathode active material, a binder, or the like, to a non-polar solvent. The prepared slurry may be applied onto the cathode current collector 11, and then dried. The pressing is performed on a laminate thus obtained to prepare the cathode 10. The pressing may include, for example, roll pressing, flat pressing, hydrostatic pressing, or the like, but is not limited thereto. Any suitable pressing method may be used. The pressing may be omitted. The cathode 10 may be prepared by compacting and molding a mixture of the materials constituting the cathode active material layer 12 in the form of pellets or by extending the mixture in a sheet form. When the cathode 10 is prepared by the methods above, the cathode current collector 11 may be omitted. Alternatively, the cathode 10 may be prepared as being impregnated with an electrolyte solution.

### Preparation of Solid Electrolyte

The solid electrolyte 30 including the oxide-containing solid electrolyte may be, for example, prepared by performing heat treatment on a precursor of an oxide-containing solid electrolyte material.

The oxide-containing solid electrolyte may be prepared by contacting the precursor in a stoichiometric amount to form a mixture and by performing heat treatment thereon. The contact may include, for example, milling including ball milling or pulverizing. The mixture of precursors mixed with a stoichiometric composition may be subjected to first heat treatment in an oxidizing atmosphere to prepare a product of the first treatment. The first heat treatment may be performed at 1,000°C or less, for 1 hour to 36 hours. The product of the first heat treatment may be pulverized. The pulverization of the product of the first heat treatment may be performed in a dry condition or a wet condition. The wet pulverization may be, for example, performed by mixing the product of the first heat treatment with a solvent such as methanol and performing ball milling thereon for about 0.5 hour to about 10 hours. The dry pulverization may be performed by ball milling without using a solvent. The particle diameter of the pulverized product of the first heat treatment may be about 0.1 µm to about 10 µm, or about 0.1 µm to about 5 µm. The pulverized product of the first heat treatment may be dried. The pulverized product of the first heat treatment may be mixed with a binder solution and then molded into pellets, or may be simply pressed at a pressure of about 1 ton to about 10 tons, and then molded into pellets.

The molded product may be subjected to second heat treatment at a temperature of less than or equal to about 1,000°C for about 1 hour to about 36 hours. Accordingly, the solid electrolyte 30 which is a sintered product of the second heat treatment may be obtained. The second heat treatment may be performed at a temperature of about 550°C to about 1,000°C. The second heat treatment may be performed for about 1 hour to about 36 hours. To obtain a sintered product, the temperature at which the second heat treatment temperature is performed may be greater than the temperature at which the first heat treatment temperature is performed. For example, the temperature at which the second heat treatment is performed may be greater than the temperature at which the first heat treatment is performed by about 10°C or more, about 20 °C or more, about 30 °C or more, or about 50 °C or more. The molded product may be subjected to the second heat treatment in at least one of an oxidizing atmosphere and a reducing atmosphere. The second heat treatment may be performed in a) an oxidizing atmosphere, b) a reducing atmosphere, or c) a combination of an oxidizing atmosphere and a reducing atmosphere.

The solid electrolyte 30 including the sulfide-containing solid electrolyte may be, for example, prepared by using a solid electrolyte formed of a sulfide-containing solid electrolyte material.

The sulfide-containing solid electrolyte may be formed by, for example, treating a starting source material with a melt quenching method or a mechanical milling method, but the methods are not limited thereto. Any suitable method available as a preparation method for the sulfide-containing solid electrolyte may be used. For example, in the case of using the melt quenching method, a small amount of starting source materials such as Li₂S, P₂S₅, or the like may be mixed, pelletized, reacted at a predetermined reaction temperature in a vacuum state, and then quenched to prepare the sulfide-containing solid electrolyte material. In addition, the reaction temperature of the mixture of Li₂S and P₂S₅ may be, for example, about 400°C to about 1,000°C, or about 800°C to about 900°C. The reaction time may be, for example, about 0.1 hour to about 12 hours, or about 1 hour to about 12 hours. The quenching temperature of the reactants may be about 10°C or less, or about 0°C or less, and the quenching rate of the reactants may be about 1°C/sec to about 10,000°C/sec, or about 1°C/sec to about 1,000°C/sec. For example, when the mechanical milling method is used, the sulfide-containing solid electrolyte material may be prepared by stirring and reacting the starting source materials such as Li₂S, P₂S₅, or the like, using a ball mill. The stirring rate and stirring time for the mechanical milling method are not particularly limited. However, the faster stirring rate leads to the faster production rate of the sulfide-containing solid electrolyte material, and the longer stirring time leads to the higher conversion rate of the source materials into the sulfide-containing solid electrolyte material. Subsequently, the mixed source materials obtained by a melt quenching method, a mechanical milling method, or the like may be heat-treated at a predetermined temperature, and then pulverized to prepare the solid electrolyte in the form of particles. When the solid electrolyte has glass transition characteristics, the amorphous state of the solid electrolyte may be changed to the crystalline state.

The solid electrolyte prepared by the method above may be, for example, deposited by using a known film forming method such as aerosol deposition, cold spray, sputtering, or the like, to prepare the solid electrolyte 30. Alternatively, the solid electrolyte 30 may be prepared by pressing the particles of the solid electrolyte. Alternatively, the solid electrolyte may be mixed with a solvent and a binder, and the mixture may be coated, dried, and pressed to prepare the solid electrolyte 30.

### Preparation of All-Solid-State Secondary Battery

The cathode 10 and the laminate of anode 20/solid electrolyte 30 prepared as described above may be stacked in a way that the solid electrolyte 30 may be arranged between the cathode 10 and the anode 20, and then pressed to prepare the all-solid-state secondary battery 1.

For example, the laminate of anode 20/solid electrolyte 30 may be arranged on the cathode 10 in a way that the cathode 10 is in contact with the solid electrolyte 30 to prepare a second laminate. Then, the second laminate may be pressed to prepare the all-solid-state secondary battery 1. The pressing may include, for example, roll pressing, flat pressing, hydrostatic pressing, or the like, but is not limited thereto. Any pressing method available in the art may be used. The pressure applied during the pressing may be, for example, about 50 MPa to about 750 MPa. The time for which the pressing is applied may be about 5 ms to about 5 min. The pressing may be, for example, performed at a temperature of about room temperature to about 90°C, or about 20 °C to 90 °C. Alternatively, the pressing may be performed at a high temperature of 100°C or greater. The configuration and manufacturing method of the all-solid-state secondary battery 1 described above is an example of the embodiment, and structural members, manufacturing procedures, and the like may be appropriately varied. The pressing may be omitted.

Hereinafter, the present subject matter will be described in further detail through Examples and Comparative Examples below. However, these examples are exemplary and non-limiting, and the scope of the present creative idea is not limited thereto.

### EXAMPLES

### Example 1: Preparation of NCA (5.1 mAh/cm²)/LLZO pellet (500 µm)/Te-TeOₓ (50 nm)/AgC (7 µm)/Li (20 µm)

An LLZO pellet (Li₇La₃Zr₂O₁₂) having a thickness of 500 µm was prepared as a solid electrolyte.

A GeTeOₓ (1.0≤x≤3) alloy film (particularly, a Ge_{1.0}Te_{0.5}O_{2.4} film) was formed to a thickness of about 50 nm through RF sputtering using a GeTe target on the LLZO pellet in an oxygen atmosphere to form a laminate in which a first anode active material layer was arranged on the solid electrolyte. In the GeTeOₓ film, a mixed atomic ratio (mixed molar ratio) of Ge to Te was 2:1. When sputtering the GeTeOₓ film, process conditions included 200 W of power, 1,800 seconds of sputtering time, and use of N₂ (1.1 kPa) as a plasma gas.

Separately, an stainless steel (SUS) foil was coated with a slurry for the second anode active material layer, and then dried at room temperature (25°C) for 1 hour to form a second anode active material layer on the SUS foil (also referred to as an AgC layer, thickness of about 7 µm).

The slurry for the second anode active material layer was prepared as follows.

As anode active materials, carbon black (CB) having a primary particle diameter of about 38 nm and Ag particles having an average particle diameter of about 100 nm were prepared.

3 grams (g) of the CB and 1 g of the Ag particles were added to a vessel, and a mixed solution in which 2.692 g of a PVA-PAA binder solution (by SUMITOMO SEIKA CHEMICALS CO., LTD.: AG binder) was added to 7 g of deionized (DI) water was added to the vessel. Then, first stirring was performed thereon at a speed of 1,000 rpm for 30 minutes to prepare a first slurry. Zirconia balls (4 g) and 20 g of DI water were added to the first slurry, and second stirring was performed thereon at a speed of 1,000 rpm for 30 minutes to prepare a second slurry. 20 g of DI water was added to the second slurry, and third stirring was performed thereon at a speed of 1,000 rpm for 30 minutes to prepare a third slurry.

Meanwhile, the LLZO layer on which the first anode active material layer (also referred to as the metal alloy layer, i.e., the Ge₂Te₁ film) was formed was subjected to acid treatment to prepare a structure of the first anode active material layer (Te-TeO₂ composite film) having pores formed therein the LLZO film. In the Te-TeO₂ composite film, the amount of Te was about 57.4 parts by weight and the amount of TeO₂ was about 42.6 parts by weight, each based on 100 parts by weight of the total weight of the Te-TeO₂ composite. For use as an acidic solution used in the acid treatment, a 1 M hydrochloric acid aqueous solution was used. After dipping for 10 second, the acidic solution was washed off with ethanol.

The second anode active material layer (also referred to as the AgC layer) was arranged on the first anode active material layer of the structure of the first anode active material layer/LLZO layer, and the SUS foil was removed by cold isotactic pressing (CIP) treatment. Then, on the resultant structure, a lithium metal foil (thickness of 20 µm) and a copper foil as an anode current collector were contacted again by applying a pressure of 250 MPa at 25°C by CIP treatment to prepare a laminate consisting of solid electrolyte/first anode active material layer/second anode active material layer/lithium metal/copper thin film.

Then, LiNi_{0.8}Co_{0.15}Al_{0.05}O₂ (NCA) was prepared as a cathode active material. In addition, poly(tetrafluoroethylene) (Dupont's TEFLON binder (registered trademark)) was prepared as a binder. In addition, a carbon nanofiber (CNF) was prepared as a conductive agent. Next, by using these materials, the cathode active material, the conductive agent, and the binder were mixed at a weight ratio of 100:2:1, to prepare a mixture. The mixture was stretched in the form of a sheet to prepare a cathode active material sheet. Then, the cathode active material sheet was compressed on a cathode current collector consisting of an aluminum foil having a thickness of 18 µm to prepare a cathode.

The cathode active material layer of the cathode thus prepared was impregnated with an electrolyte solution in which 2.0 M of lithium bis(fluorosulfonyl)imide (LiFSI) was dissolved in N-propyl-N-methyl-pyrrolidinium bis(fluorosulfonyl)imide (PYR13FSI), which is an ionic liquid.

The cathode was arranged in an SUS cap in a way that the cathode active material impregnated with the electrolyte solution was placed on top. The laminate of solid electrolyte/anode to which the anode was attached was arranged in a way that the solid electrolyte was arranged on the cathode active material layer, and then, the resultant laminate was sealed to prepare an all-solid-state secondary battery. Here, the cathode and the anode were each insulated with an insulator. A portion of each of the cathode current collector and the anode current collector was protruded to the outside of the sealed battery cell to be used as a cathode terminal and an anode terminal.

In the all-solid-state secondary battery prepared according to Example 1, the first anode active material layer included, after charging and discharging, Liₐ-Teₓ-Te_{y}O₂ (wherein 0<a≤5, 0<x≤3, and 0<y≤2), wherein, in Liₐ-Teₓ-Te_{y}O₂ (wherein 0<a≤5, 0<x≤3, and 0<y≤2), the amount of Li was 10 parts by weight, the amount of Te was 55 parts by weight, and the amount of TeO₂ was 35 parts by weight, based on 100 parts by weight of the total weight of Liₐ-Teₓ-Te_{y}O₂ composite

### Example 2

An all-solid-state secondary battery was prepared in a similar manner as in Example 1, except that LiCoO₂ was used instead of LiNi_{0.8}Co_{0.15}Al_{0.05}O₂ (NCA) as the cathode active material in forming the cathode active material layer.

### Example 3

An all-solid-state secondary battery was prepared in a similar manner as in Example 1, except that an LLZO tape (thickness: 80 µm) was used instead of the LLZO (Li₇La₃Zr₂O₁₂) having a thickness 500 µm as the solid electrolyte.

### Example 4: Preparation of NCA (5.1 mAh/cm²)/LLZO pellet (500 µm)/LiTeTeO₂ (100 nm)/carbon (7 µm)/Li (20 µm)

A second anode active material layer (also referred to as the C layer)(thickness: about 7 µm) was formed on the SUS foil in a similar manner as in Example 1, except that a slurry for a second anode active material layer obtained by the following procedure was used as the slurry for the second anode active material layer.

3 g of CB as an anode active material was added to a vessel, and a mixed solution in which 2.692 g of a PVA-PAA binder solution (by SUMITOMO SEIKA CHEMICALS CO., LTD, AG binder) was added to 7 g of DI water, was then added to the vessel. Then, first stirring was performed thereon at a speed of 1,000 rpm for 30 minutes to prepare a first slurry. Zirconia balls (4 g) and 20 g of DI water were added to the first slurry, and second stirring was performed thereon at a speed of 1,000 rpm for 30 minutes to prepare a second slurry. 20 g of DI water was added to the second slurry, and third stirring was performed thereon at a speed of 1,000 rpm for 30 minutes to prepare a third slurry.

### Example 5: Preparation of NCA (5.1 mAh/cm²)/LLZTO pellet (500 µm)/Te-ZnOₓ (50 nm)/AgC (7 um)/Li (20 um)

An LLZO pellet (Li₇La₃Zr₂O₁₂) having a thickness of 500 µm was prepared as a solid electrolyte.

A GeTeZnOₓ (wherein 1.0≤x≤3) alloy film (particularly, a Ge_{1.0}Te_{0.5}Zn_{0.41}O_{2.4} film) was formed to a thickness of about 50 nm through RF sputtering using GeTe and Zn targets on the LLZO pellet in an oxygen atmosphere to form a laminate in which a first anode active material layer was arranged on the solid electrolyte. In the GeTeZnOₓ film, a mixed atomic ratio (mixed molar ratio) of Ge to Te was 2:1. When sputtering the GeTeZnOₓ film, process conditions included GeTe target power of 1500 W, Zn target power of 100 W, 10 minutes of sputtering time, and the use of Ar (40 standard cubic centimeters per minute (sccm)) and O₂ (10 sccm) as a plasma gas.

Separately, an SUS foil was coated with a slurry for the second anode active material layer, and then dried at room temperature (25°C) for 1 hour to form a second anode active material layer on the SUS foil (also referred to as AgC layer, thickness: about 7 µm).

The slurry for the second anode active material layer was prepared as follows.

As anode active materials, CB having a primary particle diameter of about 38 nm and Ag particles having an average particle diameter of about 100 nm were prepared.

3 g of the CB and 1 g of the Ag particles were added to a vessel, and a mixed solution in which 2.692 g of a PVA-PAA binder solution (by SUMITOMO SEIKA CHEMICALS CO., LTD., AG binder) was added to 7 g of DI water, was added to the vessel. Then, first stirring was performed thereon at a speed of 1,000 rpm for 30 minutes to prepare a first slurry. Zirconia balls (4 g) and 20 g of DI water were added to the first slurry, and second stirring was performed thereon at a speed of 1,000 rpm for 30 minutes to prepare a second slurry. 20 g of DI water was added to the second slurry, and third stirring was performed thereon at a speed of 1,000 rpm for 30 minutes to prepare a third slurry.

Meanwhile, the LLZO layer on which the first anode active material layer (also referred to as the metal alloy layer, i.e., the Ge₂Te₁Zn_{y} film) was formed was subject to acid treatment to prepare a structure of the first anode active material layer having pores formed therein (Te-ZnO₂ composite film)(thickness of 50 nm)/LLZO film. In the Te-ZnO₂ composite film, the amount of Te was about 61 parts by weight and the amount of ZnO₂ was about 39 parts by weight, based on 100 parts by weight of the total weight of the Te-ZnO₂ composite. For use as an acidic solution used in the acid treatment, a 1 M hydrochloric acid aqueous solution was used. After dipping for 1 second, the acidic solution was washed off with ethanol.

The second anode active material layer (also referred to as the AgC layer) was arranged on the first anode active material layer of the structure of the first anode active material layer/LLZO layer, and the SUS foil was removed by CIP treatment. Then, on the resultant structure, a lithium metal foil (thickness of 20 µm) and a copper foil as an anode current collector contacted again by applying a pressure of 250 MPa at 25°C by CIP treatment to prepare a laminate consisting of solid electrolyte/first anode active material layer/second anode active material layer/lithium metal/copper thin film.

Then, LiNi_{0.8}Co_{0.15}Al_{0.05}O₂ (NCA) was prepared as a cathode active material. In addition, poly(tetrafluoroethylene) (Dupont's TEFLON binder (registered trademark)) was prepared as a binder. In addition, a carbon nanofiber (CNF) was prepared as a conductive agent. Next, by using these materials, the cathode active material, the conductive agent, and the binder were mixed at a weight ratio of 100:2:1, to prepare a mixture. The mixture was stretched in the form of a sheet to prepare a cathode active material sheet. Then, the cathode active material sheet was compressed on a cathode current collector consisting of an aluminum foil having a thickness of 18 µm to prepare a cathode.

The cathode active material layer of the cathode thus prepared was impregnated with an electrolyte solution in which 2.0 M of LiFSI was dissolved in PYR13FSI.

The cathode was arranged in an SUS cap in a way that the cathode active material that was impregnated with the electrolyte solution was placed on top. The laminate of solid electrolyte/anode to which the anode was attached was arranged in a way that the solid electrolyte was arranged on the cathode active material layer, and then, the resultant laminate was sealed to prepare an all-solid-state secondary battery. Here, the cathode and the anode were each insulated with an insulator. A portion of each of the cathode current collector and the anode current collector was protruded to the outside of the sealed battery cell to be used as a cathode terminal and an anode terminal, respectively.

In the all-solid-state secondary battery prepared according to Example 5, the first anode active material layer included, after charging and discharging, Liₐ₋Teₓ₋Zn_{y}O₂ (wherein 0<a≤5, 0<x≤3, and 0<y≤2), wherein, in Liₐ₋Teₓ₋Zn_{y}O₂, the amount of Li was 10 parts by weight, the amount of Te was 55 parts by weight, and the amount of ZnO₂ was 35 parts by weight, based on 100 parts by weight of the total weight of the Liₐ₋Teₓ₋ Zn_{y}O₂ composite.

### Reference Example 1

A first anode active material layer was arranged on the solid electrolyte in the same manner as in Example 1, except that a GeTe alloy film (Ge₁Te_{0.5} film) was formed instead of the GeTeOₓ alloy film (Ge₁Te_{0.5}O_{2.4} film). Here, when sputtering the GeTe alloy film (Ge₁Te_{0.5} film), process conditions included the argon atmosphere, 200 W of power, 1,800 seconds of sputtering time, and the use of N₂ (1.1 kPa) as a plasma gas.

### Comparative Example 1: Formation of metallic Te film

An all-solid-state secondary battery was prepared in a similar manner as in Reference Example 1, except that a Te film was formed instead of the GeTe film. When sputtering the Te film, process conditions included the argon atmosphere, 200 W of power, 1,800 seconds of sputtering time, and the use of N₂ (1.1 kPa) as a plasma gas.

### Comparative Example 2: Formation of TeOₓ film

An all-solid-state secondary battery was prepared in a similar manner as in Reference Example 1, except that a TeOₓ film (wherein 1≤x≤3, particularly x=2) was formed instead of the GeTe alloy film (Ge₁Te_{0.5} film).

The TeOx (1≤x≤3, particularly x = 2) film was formed on the top of the LLZO pellet to a thickness of about 100 nm through RF sputtering using a Te target under an oxygen atmosphere to thus form a metal alloy layer. As a result, a first anode active material layer was formed on top of the solid electrolyte layer.

### Comparative Example 3: Formation of Te-rich GeTe film

A Te-rich GeTe film was formed to a thickness of about 100 nm through RF sputtering using GeTe targets on an LLZO pellet in an argon atmosphere to form a laminate in which a first anode active material layer was arranged on the solid electrolyte. In the GeTe film, a mixed atomic ratio (mixed molar ratio) of Ge to Te was 1:2. When sputtering the GeTe film, process conditions included 200 W of power, 1,800 seconds of sputtering time, and the use of N₂ (1.1 kPa) as plasma gas. Accordingly, an all-solid-state secondary battery was prepared in a similar manner as in Example 1, except that the GeTe film was formed.

### Comparative Example 4: Poreless TeOx/carbon/Li NCA (5.1 mAh/cm²)/LLZO pellet (500 µm)/LiTeOₓ (100 nm)/carbon layer/Li (20 µm)

An LLZO pellet (Li₇La₃Zr₂O₁₂) having a thickness of 500 µm was prepared as a solid electrolyte.

A TeOₓ alloy film was formed to a thickness of about 100 nm through RF sputtering using Te as a target on the LLZO pellet in an oxygen atmosphere to form a laminate in which a first anode active material layer was arranged on the solid electrolyte. When sputtering the TeOₓ film, process conditions included 200 W of power, 1,800 seconds of sputtering time, and the use of N₂ (1.1 kPa) as a plasma gas.

Separately, an SUS foil was coated with a slurry for the second anode active material layer, and then dried at room temperature (25°C) for 1 hour to form a second anode active material layer on the SUS foil (also referred to as the AgC layer, thickness of about 7 µm).

The slurry for the second anode active material layer was prepared as follows.

3 g of CB as an anode active material was added to a vessel, and a mixed solution in which 2.692 g of a PVA-PAA binder solution (by SUMITOMO SEIKA CHEMICALS CO., LTD, AG binder) was added to 7 g of DI water, was added to the vessel. Then, first stirring was performed thereon at a speed of 1,000 rpm for 30 minutes to prepare a first slurry. Zirconia balls (4 g) and 20 g of DI water were added to the first slurry, and second stirring was performed thereon at a speed of 1,000 rpm for 30 minutes to prepare a second slurry. 20 g of DI water was added to the second slurry, and third stirring was performed thereon at a speed of 1,000 rpm for 30 minutes to prepare a third slurry.

The second anode active material layer (also referred to as the C layer) was arranged on the first anode active material layer of the structure of the first anode active material layer/LLZO layer, and the SUS foil was removed by CIP treatment. Then, on the resultant structure, a lithium metal foil (thickness of 20 µm) and a copper foil as an anode current collector were contacted again by applying a pressure of 250 MPa at 25°C by CIP treatment to prepare a laminate consisting of solid electrolyte/first anode active material layer/second anode active material layer/lithium metal/copper thin film.

Then, LiNi_{0.8}Co_{0.15}Al_{0.05}O₂ (NCA) was prepared as a cathode active material. In addition, poly(tetrafluoroethylene) (Dupont's TEFLON binder (registered trademark)) was prepared as a binder. In addition, a carbon nanofiber (CNF) was prepared as a conductive agent. Next, by using these materials, the cathode active material, the conductive agent, and the binder were mixed at a weight ratio of 100:2:1, to prepare a mixture. The mixture was stretched in the form of a sheet to prepare a cathode active material sheet. Then, the cathode active material sheet was compressed on a cathode current collector consisting of an aluminum foil having a thickness of 18 µm to prepare a cathode.

The cathode active material layer of the cathode thus prepared was impregnated with an electrolyte solution in which 2.0 M of LiFSI was dissolved in PYR13FSI.

The cathode was arranged in an SUS cap in a way that the cathode active material that was impregnated with the electrolyte solution was placed on top. The laminate of solid electrolyte/anode to which the anode was attached was arranged in a way that the solid electrolyte was arranged on the cathode active material layer, and then, the resultant laminate was sealed to prepare an all-solid-state secondary battery. Here, the cathode and the anode were each insulated with an insulator. A portion of each of the cathode current collector and the anode current collector was protruded to the outside of the sealed battery cell to be used as a cathode terminal and an anode terminal, respectively.

### Comparative Example 5: Te-TeOₓ/Li (carbon layer-free film)

An all-solid-state secondary battery was prepared in a similar manner as in Example 1, except that the AgC layer was not formed between the Te-TeOₓ film (50 nm) and the lithium layer.

### Evaluation Example 1: Interfacial resistance

### (1) Examples 1 and 4, Reference Example 1, and Comparative Examples 1 and 2

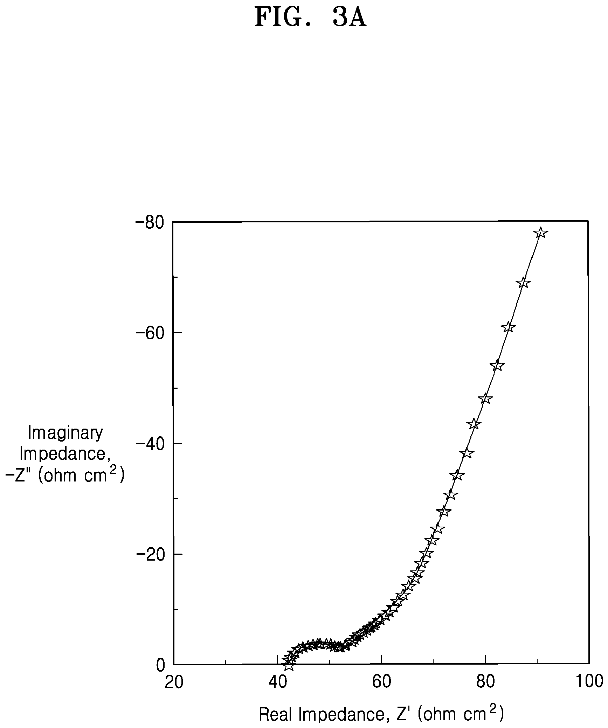

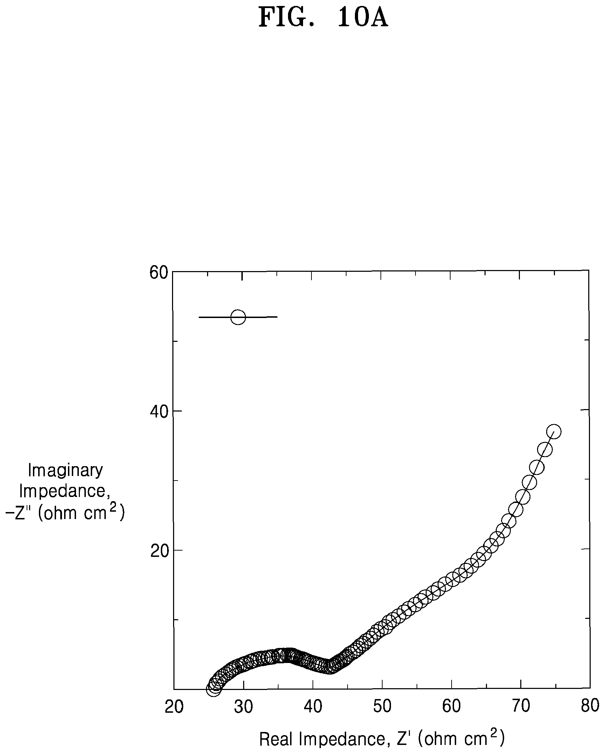

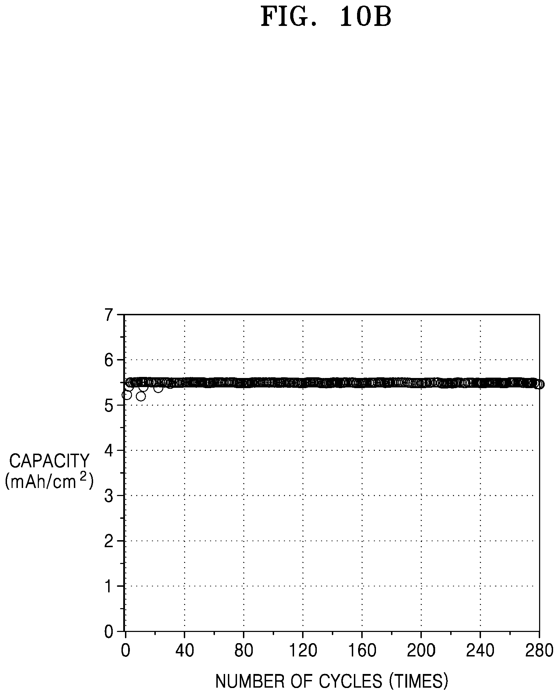

For each of the all-solid-state secondary batteries of Examples 1 and 4, Reference Example 1, and Comparative Examples 1 and 2, the overall resistance was measured. For each of the all-solid-state secondary batteries, the impedance was also measured according to the two-probe technique using an impedance analyzer (Solartron 1400A/1455A impedance analyzer). Here, the frequency range was from about 0.1 Hertz (Hz) to about 1 megahertz (MHz), and the amplitude voltage was about 10 millivolts (mV). The measurement was performed at 25°C in the air atmosphere. Nyquist plots for the impedance measurement results are shown in FIGS. 3A, 4A, 5A, and 6A. FIGS. 3A, 4A, 5A, and 6A show the impedance characteristics of the all-solid-state secondary batteries of Example 1, Reference Example 1, Comparative Example 1, and Comparative Example 2, respectively. In addition, FIG. 10A shows the impedance characteristics of the all-solid-state secondary battery of Example 4.

As a result of fitting the Nyquist plots of FIGS. 3A, 4A, 5A, 6A and 10A to the equivalent circuit, it was confirmed that the interfacial resistance values of the all-solid-state secondary batteries of Examples 1 and 4 were about 11 Ω and about 20 Ω, respectively, which were smaller values than those of the all-solid-state secondary batteries of Reference Example 1 and Comparative Examples 1 and 2.

### (2) Example 1 and Comparative Examples 4 and 5

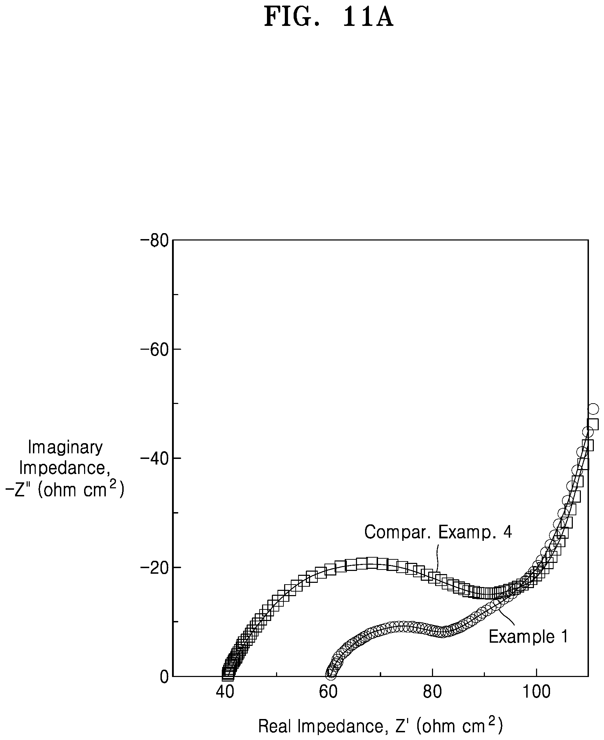

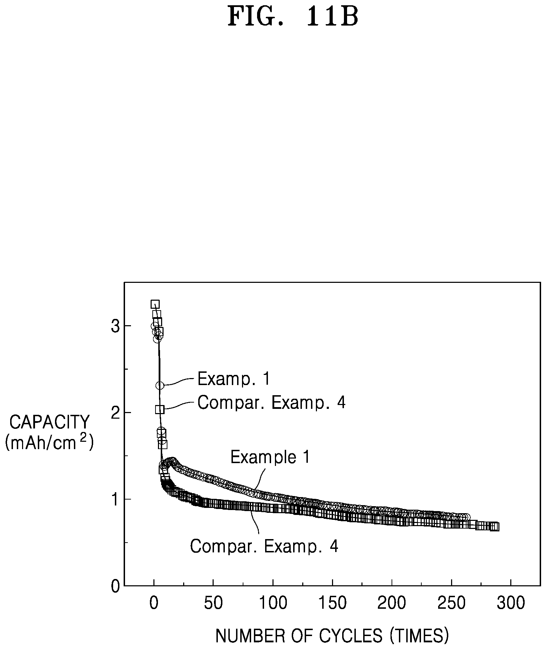

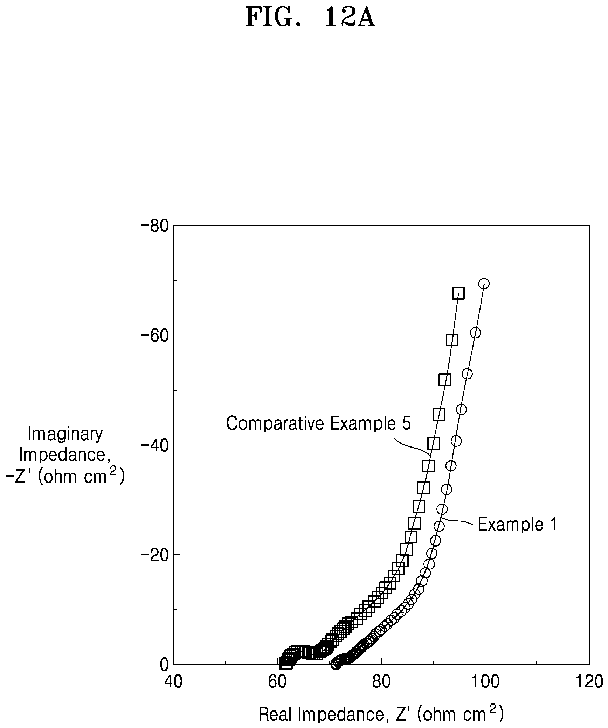

For each of the all-solid-state secondary batteries of Example 1 and Comparative Examples 4 and 5, the overall resistance was measured in the same manner as in the evaluation of the overall resistance of the all-solid-state secondary battery of Example 1, and the results are shown in FIGS. 11A and 12A, respectively.

Referring to FIG. 11A, it was confirmed that the all-solid-state secondary battery of Example 1 had improved resistance characteristics compared to those of the all-solid-state secondary battery of Comparative Example 4. As shown in FIG. 12A, it was confirmed that the all-solid-state secondary battery of Example 1 had improved resistance characteristics compared to those of the all-solid-state secondary battery of Comparative Example 5.

### 3) Example 5

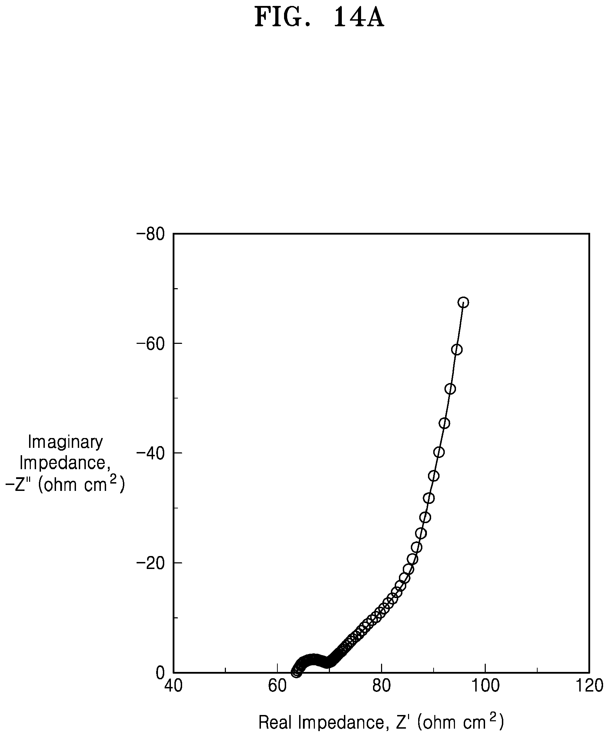

For the all-solid-state secondary battery of Example 5, the overall resistance was measured. For the all-solid-state secondary battery, the impedance was also measured according to the two-probe technique using an impedance analyzer (Solartron 1400A/1455A impedance analyzer). Here, the frequency range was from about 0.1 Hz to about 1 MHz, and the amplitude voltage was about 10 mV. The measurement was performed at 25°C in the air atmosphere. Nyquist plots for the impedance measurement results are shown in FIG. 14A.

Referring to FIG. 14A, it was confirmed that the all-solid-state secondary battery of Example 5 had improved resistance characteristics.

### Evaluation Example 2: Charge/discharge profile

### (1) Example 1, Reference Example 1, and Comparative examples 1 and 2

For the all-solid-state secondary batteries of Example 1, Reference Example 1, and Comparative Examples 1 and 2, the charging and discharging characteristics were evaluated by the following charging and discharging test. The charging and discharging test was performed by putting the all-solid-state secondary battery in a thermostatic bath at 25°C.

For a first cycle, the all-solid-state secondary batteries were charged with a constant current of 0.4 milliamperes per square centimeter (mA/cm²) until a battery voltage reached 4.3 V. Subsequently, the all-solid-state secondary batteries were discharged with a constant current of 0.4 mA/cm² until a battery voltage reached 2.8 V.

For a second cycle, the all-solid-state secondary batteries were charged with a constant current of 0.5 mA/cm² until a battery voltage reached 4.3 V. Subsequently, the all-solid-state secondary batteries were discharged with a constant current of 0.5 mA/cm² until a battery voltage reached 2.8 V.

For a third cycle, the all-solid-state secondary batteries were charged with a constant current of 0.8 mA/cm² until a battery voltage reached 4.3 V. Subsequently, the all-solid-state secondary batteries were discharged with a constant current of 0.8 mA/cm² until a battery voltage reached 2.8 V.

For a fourth cycle, the all-solid-state secondary batteries were charged with a constant current of 1.0 mA/cm² until a battery voltage reached 4.3 V. Subsequently, the all-solid-state secondary batteries were discharged with a constant current of 1.0 mA/cm² until a battery voltage reached 2.8 V.

For a fifth cycle, the all-solid-state secondary batteries were charged with a constant current of 1.6 mA/cm² until a battery voltage reached 4.3 V. Subsequently, the all-solid-state secondary batteries were discharged with a constant current of 1.5 mA/cm² until a battery voltage reached 2.8 V.

For a sixth cycle, the all-solid-state secondary batteries were charged with a constant current of 2.0 mA/cm² until a battery voltage reached 4.3 V. Subsequently, the all-solid-state secondary batteries were discharged with a constant current of 2.0 mA/cm² until a battery voltage reached 2.8 V.

For each of the seventh to three hundredth cycles, the all-solid-state secondary batteries were charged with a constant current of 2.5 mA/cm² until a battery voltage reached 4.3 V. Subsequently, the all-solid-state secondary batteries were discharged with a constant current of 2.5 mA/cm² until a battery voltage reached 2.8 V.

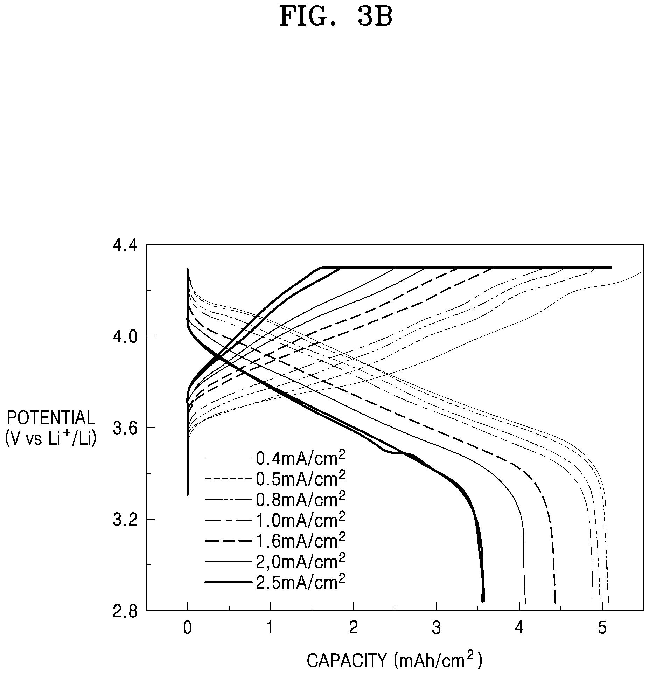

Some of the charging and discharging test results are shown in FIGS. 3B, 4B, 5B, and 6B.

Referring to FIGS. 3B, 4B, 5B, and 6B, it was confirmed that the all-solid-state secondary battery of Example 1 showed stable charging and discharging in the repeated charging/discharging process as compared to the all-solid-state secondary batteries of Reference Example 1 and Comparative Examples 1 and 2.

### (2) Example 1 and Comparative Example 4

For the all-solid-state secondary batteries of Example 1 and Comparative Example 4, the charge/discharge profiles were evaluated as follows.

For the first cycle, the all-solid-state secondary batteries were charged with a constant current of 0.4 mA/cm² until a battery voltage reached 4.5 V. Subsequently, the all-solid-state secondary batteries were discharged with a constant current of 0.4 mA/cm² until a battery voltage reached 2.8 V.

For the second and third cycles, the all-solid-state secondary batteries were charged with a constant current of 0.8 mA/cm² until a battery voltage reached 4.5 V. Subsequently, the all-solid-state secondary batteries were discharged with a constant current of 0.8 mA/cm² until a battery voltage reached 2.8 V.

For the fourth and fifth cycles, the all-solid-state secondary batteries were charged with a constant current of 1.2 mA/cm² until a battery voltage reached 4.5 V. Subsequently, the all-solid-state secondary batteries were discharged with a constant current of 1.2 mA/cm² until a battery voltage reached 2.8 V.

For the sixth to three hundredth cycles, the all-solid-state secondary batteries were charged with a constant current of 1.6 mA/cm² until a battery voltage reached 4.5 V. Subsequently, the all-solid-state secondary batteries were discharged with a constant current of 1.6 mA/cm² until a battery voltage reached 2.8 V.

Accordingly, it was confirmed that the all-solid-state secondary battery of Example 1 had improved charging and discharging characteristics as compared to the all-solid-state secondary battery of Comparative Example 4.

### (3) Example 1 and Comparative Example 5

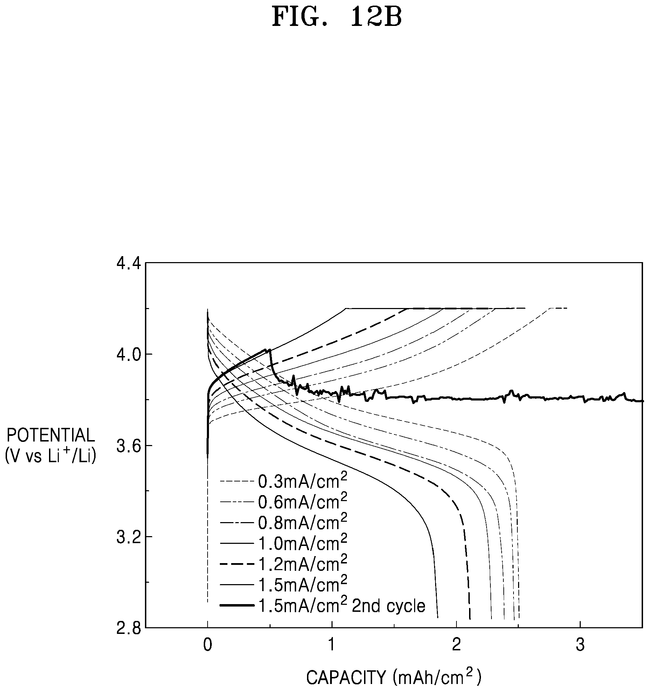

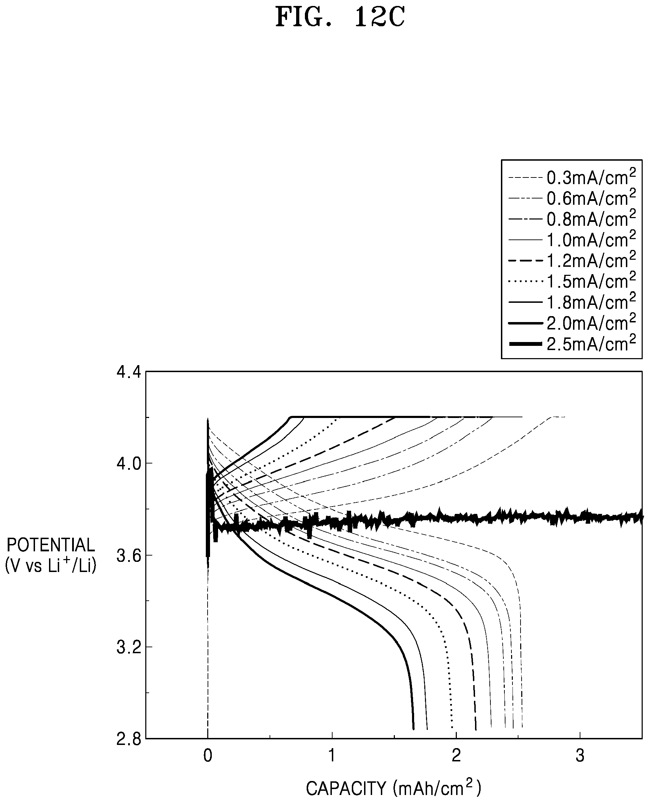

For the all-solid-state secondary batteries of Example 1 and Comparative Example 5, the charge/discharge profiles were evaluated as follows, and the evaluation results are shown in FIGS. 12B and 12C, respectively.

For the first cycle, the all-solid-state secondary batteries were charged with a constant current of 0.3 mA/cm² until a battery voltage reached 4.2 V. Subsequently, the all-solid-state secondary batteries were discharged with a constant current of 0.3 mA/cm² until a battery voltage reached 2.8 V.

For the second and third cycles, the all-solid-state secondary batteries were charged with a constant current of 0.6 mA/cm² until a battery voltage reached 4.2 V. Subsequently, the all-solid-state secondary batteries were discharged with a constant current of 0.6 mA/cm² until a battery voltage reached 2.8 V.

For the fourth and fifth cycles, the all-solid-state secondary batteries were charged with a constant current of 0.8 mA/cm² until a battery voltage reached 4.2 V. Subsequently, the all-solid-state secondary batteries were discharged with a constant current of 0.8 mA/cm² until a battery voltage reached 2.8 V.

For the sixth and seventh cycles, the all-solid-state secondary batteries were charged with a constant current of 1.0 mA/cm² until a battery voltage reached 4.2 V. Subsequently, the all-solid-state secondary batteries were discharged with a constant current of 1.0 mA/cm² until a battery voltage reached 2.8 V.

For the eighth and ninth cycles, the all-solid-state secondary batteries were charged with a constant current of 1.2 mA/cm² until a battery voltage reached 4.2 V. Subsequently, the all-solid-state secondary batteries were discharged with a constant current of 1.2 mA/cm² until a battery voltage reached 2.8 V.

For the tenth and eleventh cycles, the all-solid-state secondary batteries were charged with a constant current of 1.5 mA/cm² until a battery voltage reached 4.2 V. Subsequently, the all-solid-state secondary batteries were discharged with a constant current of 1.5 mA/cm² until a battery voltage reached 2.8 V.

For the twelfth and thirteenth cycles, the all-solid-state secondary batteries were charged with a constant current of 1.8 mA/cm² until a battery voltage reached 4.2 V. Subsequently, the all-solid-state secondary batteries were discharged with a constant current of 1.8 mA/cm² until a battery voltage reached 2.8 V.

For the fourteenth and fifteenth cycles, the all-solid-state secondary batteries were charged with a constant current of 2.0 mA/cm² until a battery voltage reached 4.2 V. Subsequently, the all-solid-state secondary batteries were discharged with a constant current of 2.0 mA/cm² until a battery voltage reached 2.8 V.

For the sixteenth to three hundredth cycles, the all-solid-state secondary batteries were charged with a constant current of 2.5 mA/cm² until a battery voltage reached 4.2 V. Subsequently, the all-solid-state secondary batteries were discharged with a constant current of 2.5 mA/cm² until a battery voltage reached 2.8 V.

Accordingly, it was confirmed that the all-solid-state secondary battery of Example 1 had improved charging and discharging characteristics as compared to the all-solid-state secondary battery of Comparative Example 5.

### (4) Example 5

For the all-solid-state secondary battery of Example 5, the charge/discharge profile was evaluated under the following conditions. The charging and discharging test was performed by putting the all-solid-state secondary battery in a thermostatic bath at 25°C.

For the first cycle, the all-solid-state secondary battery was charged with a constant current of 0.3 mA/cm² until a battery voltage reached 4.2 V. Subsequently, the all-solid-state secondary battery was discharged with a constant current of 0.3 mA/cm² until a battery voltage reached 2.8 V.

For the second and third cycles, the all-solid-state secondary battery was charged with a constant current of 0.6 mA/cm² until a battery voltage reached 4.2 V. Subsequently, the all-solid-state secondary battery was discharged with a constant current of 0.6 mA/cm² until a battery voltage reached 2.8 V.

For the fourth and fifth cycles, the all-solid-state secondary battery was charged with a constant current of 0.8 mA/cm² until a battery voltage reached 4.2 V. Subsequently, the all-solid-state secondary battery was discharged with a constant current of 0.8 mA/cm² until a battery voltage reached 2.8 V.

For the sixth and seventh cycles, the all-solid-state secondary battery was charged with a constant current of 1.0 mA/cm² until a battery voltage reached 4.2 V. Subsequently, the all-solid-state secondary battery was discharged with a constant current of 1.0 mA/cm² until a battery voltage reached 2.8 V.

For the eighth and ninth cycles, the all-solid-state secondary battery was charged with a constant current of 1.2 mA/cm² until a battery voltage reached 4.2 V. Subsequently, the all-solid-state secondary battery was discharged with a constant current of 1.2 mA/cm² until a battery voltage reached 2.8 V.

For the tenth and eleventh cycles, the all-solid-state secondary battery was charged with a constant current of 1.5 mA/cm² until a battery voltage reached 4.2 V. Subsequently, the all-solid-state secondary battery was discharged with a constant current of 1.5 mA/cm² until a battery voltage reached 2.8 V.

For the twelfth and thirteenth cycles, the all-solid-state secondary battery was charged with a constant current of 1.8 mA/cm² until a battery voltage reached 4.2 V. Subsequently, the all-solid-state secondary battery was discharged with a constant current of 1.8 mA/cm² until a battery voltage reached 2.8 V.

For the fourteenth and fifteenth cycles, the all-solid-state secondary battery was charged with a constant current of 2.0 mA/cm² until a battery voltage reached 4.2 V. Subsequently, the all-solid-state secondary battery was discharged with a constant current of 2.0 mA/cm² until a battery voltage reached 2.8 V.

For the sixteenth to three hundredth cycles, the all-solid-state secondary battery was charged with a constant current of 2.5 mA/cm² until a battery voltage reached 4.2 V. Subsequently, the all-solid-state secondary battery was discharged with a constant current of 2.5 mA/cm² until a battery voltage reached 2.8 V.

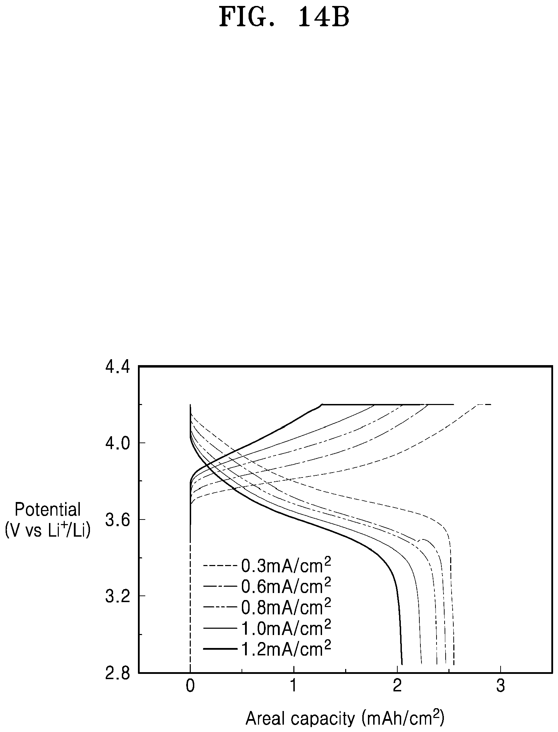

Some of the charging and discharging test results are shown in FIG. 14B.

Referring to FIG. 14B, the all-solid-state secondary battery of Example 5 exhibited excellent charging and discharging characteristics.

### Evaluation Example 3: Charging/discharging test at room temperature

For the all-solid-state secondary batteries of Example 1, Reference Example 1, and Comparative Examples 1 and 2, the charging and discharging characteristics were evaluated by the following charging and discharging test. The charging and discharging test was performed by putting the all-solid-state secondary batteries in a thermostatic bath at 25°C.

For a first cycle, the all-solid-state secondary batteries were charged with a constant current of 0.4 mA/cm² until a battery voltage reached 4.3 V. Subsequently, the all-solid-state secondary batteries were discharged with a constant current of 0.4 mA/cm² until a battery voltage reached 2.8 V.

For a second cycle, the all-solid-state secondary batteries were charged with a constant current of 0.5 mA/cm² until a battery voltage reached 4.3 V. Subsequently, the all-solid-state secondary batteries were discharged with a constant current of 0.5 mA/cm² until a battery voltage reached 2.8 V.

The charging and discharging was repeatedly performed up to the number of cycles shown in 3C, 4C, 5C, and 6C respectively under the same charging and discharging conditions as in the second cycle.

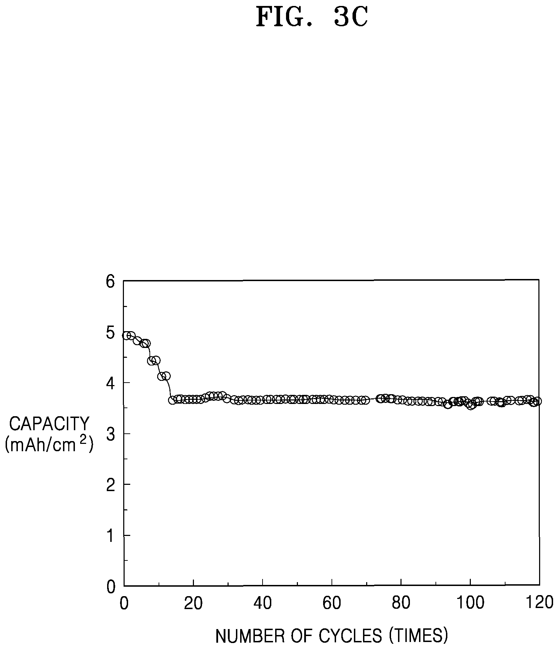

Some of the charging and discharging test results are shown in FIGS. 3C, 4C, 5C, and 6C.

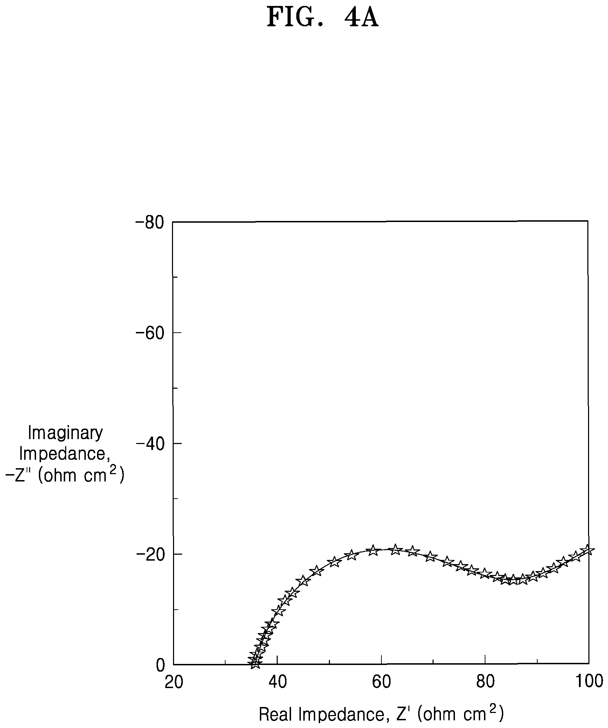

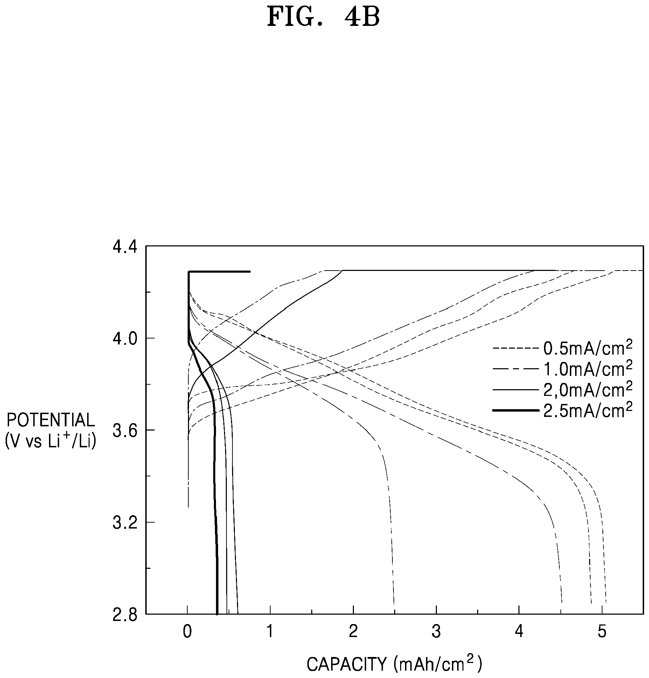

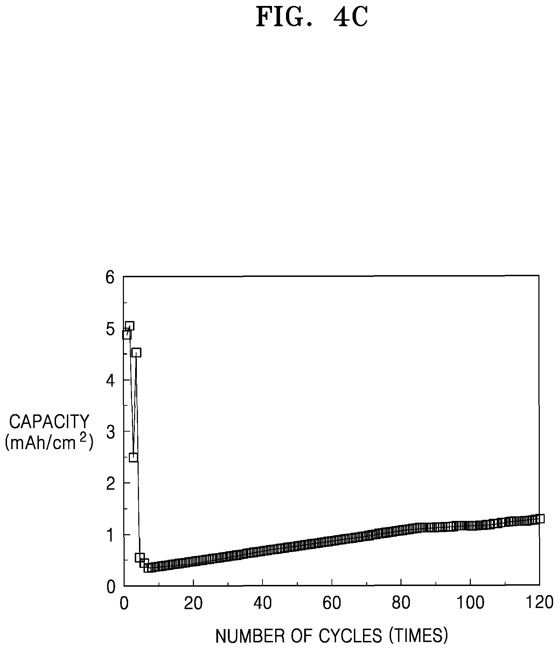

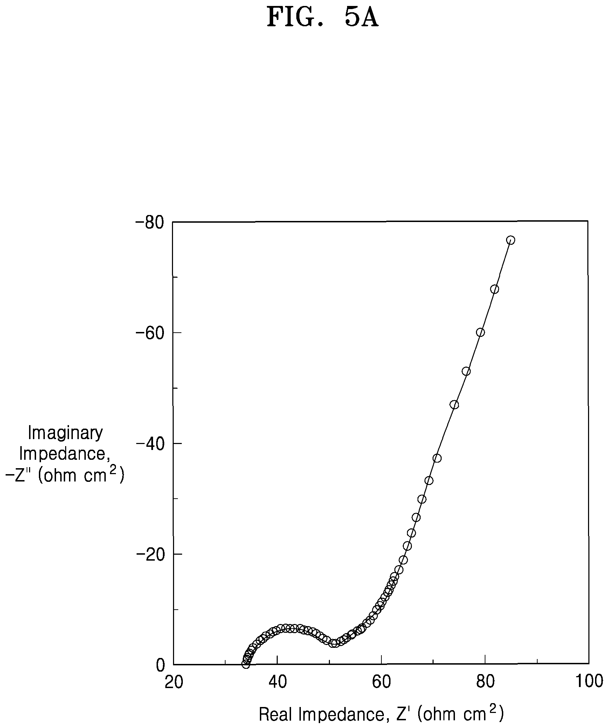

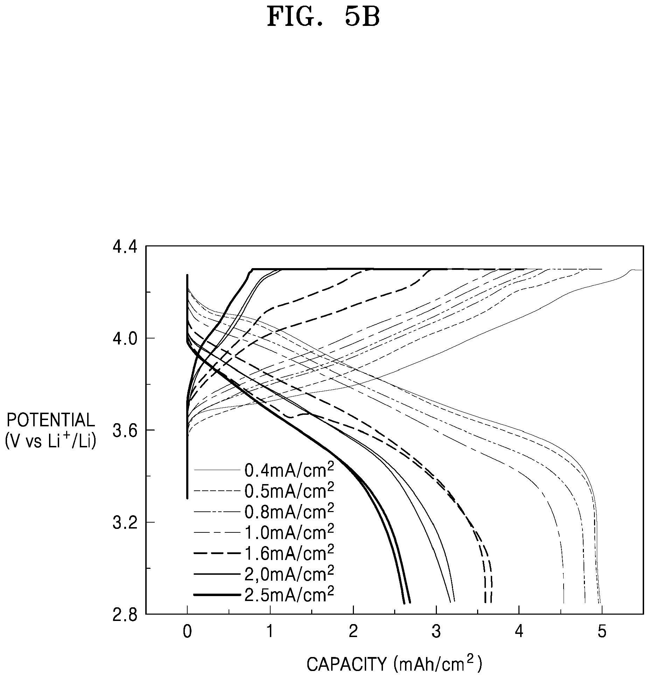

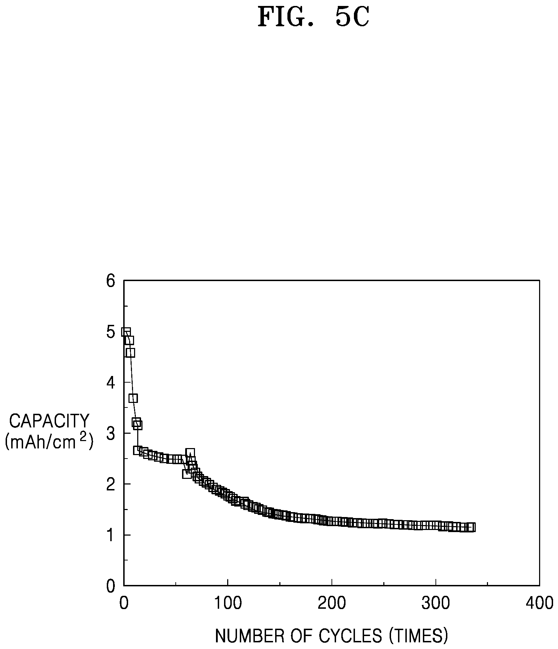

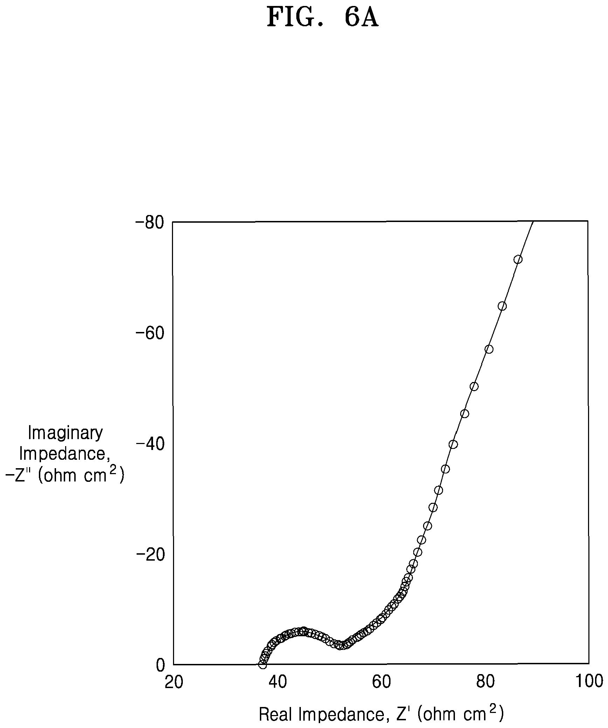

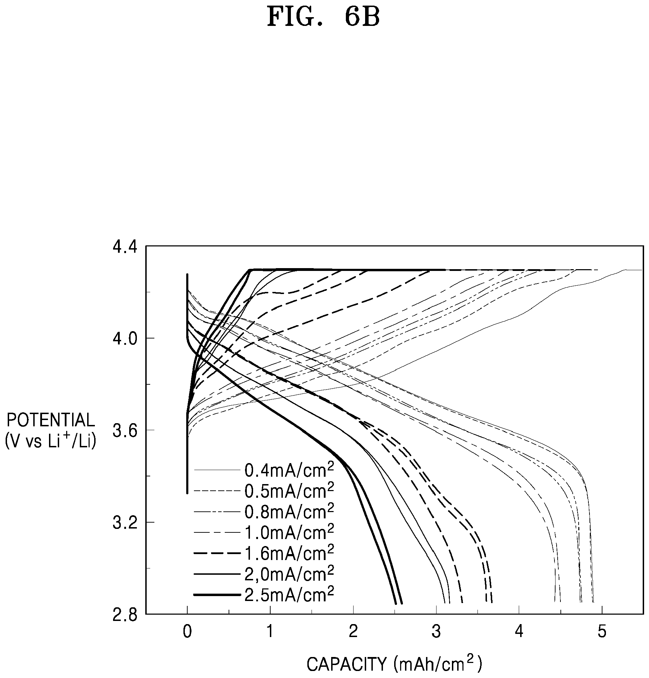

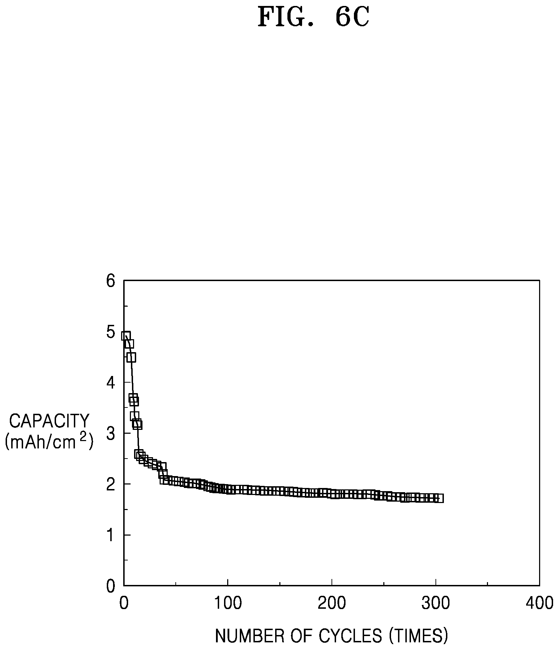

As shown in FIG. 3C, it was confirmed that the all-solid-state secondary battery of Example 1 had improved capacity retention rate as compared to the all-solid-state secondary battery of Reference Example 1 shown in FIG. 4C, the all-solid-state secondary battery of Comparative Example 1 shown in FIG. 5C, and the all-solid-state secondary battery of Comparative Example 2 shown in FIG. 6C.

### Evaluation Example 4: Rate characteristics

The charging and discharging characteristics of the all-solid-state secondary batteries of Example 2 and Comparative Example 3 were evaluated by the following charging and discharging test. The charging and discharging test was performed by putting the all-solid-state secondary batteries in a thermostatic bath at 25°C.

For a first cycle, the all-solid-state secondary batteries were charged with a constant current of 0.2 mA/cm² until a battery voltage reached 4.3 V. Subsequently, the all-solid-state secondary batteries were discharged with a constant current of 0.2 mA/cm² until a battery voltage reached 2.8 V. The rate characteristics were examined while increasing the current density from a 0.2 mA/cm² step to a 1.6 mA/cm² step and 4 mA/cm² step under the charging and discharging condition of the first cycle.

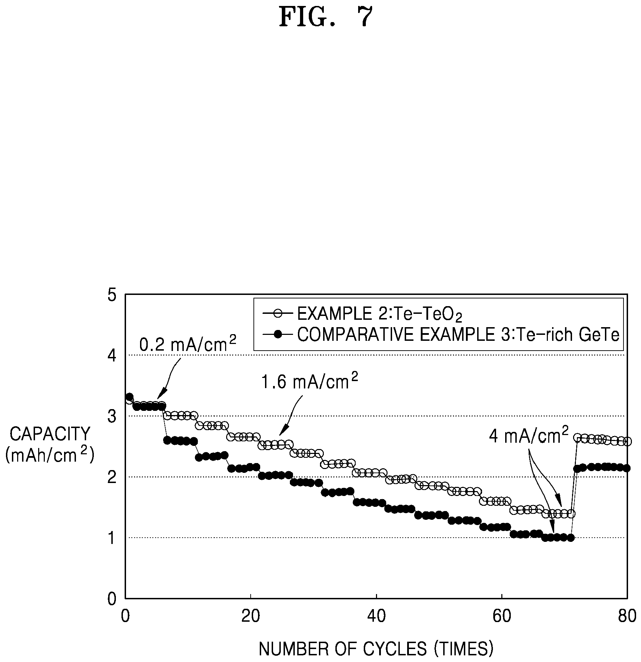

The examination results are shown in FIG. 7.

As shown in FIG. 7, it was found that the all-solid-state secondary battery of Example 2 had excellent rate characteristics even at a high current density of 4 mA/cm².

### Evaluation Example 5: Lifespan at room temperature

### (1) Example 2 and Comparative Example 3

The charging and discharging characteristics of the all-solid-state secondary batteries of Example 2 and Comparative Example 3 were evaluated by the following charging and discharging test. The charging and discharging test was performed by putting the all-solid-state secondary batteries in a thermostatic bath at 25°C.

For a first cycle, the all-solid-state secondary batteries were charged with a constant current of 2.2 mA/cm² until a battery voltage reached 4.3 V. Subsequently, the all-solid-state secondary batteries were discharged with a constant current of 2.2 mA/cm² until a battery voltage reached 2.8 V. The charging and discharging was repeatedly performed up to a total of 1,000 cycles under the same charging and discharging conditions as in the first cycle.

For a 1001st cycle, the all-solid-state secondary batteries were charged with a constant current of 3 mA/cm² until a battery voltage reached 4.3 V. Subsequently, the all-solid-state secondary batteries were discharged with a constant current of 3 mA/cm² until a battery voltage reached 2.8 V. The charging and discharging was repeatedly performed up to a total of 1,300 cycles under the same charging and discharging conditions as in the 1001st cycle.

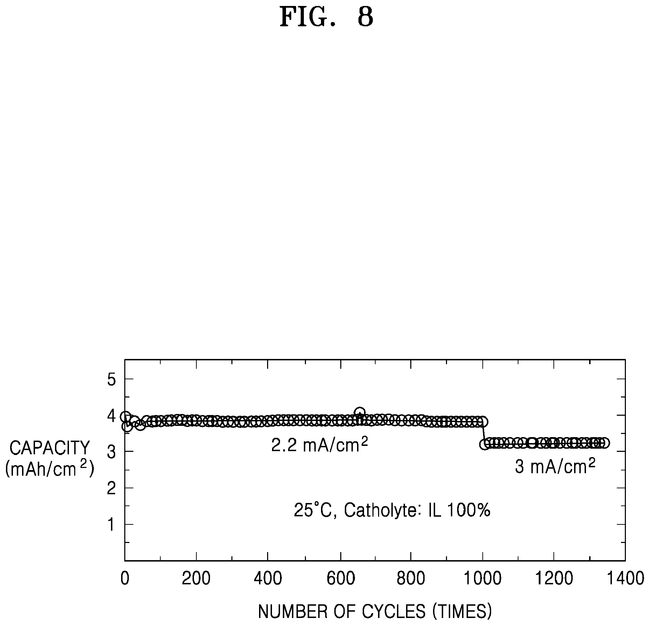

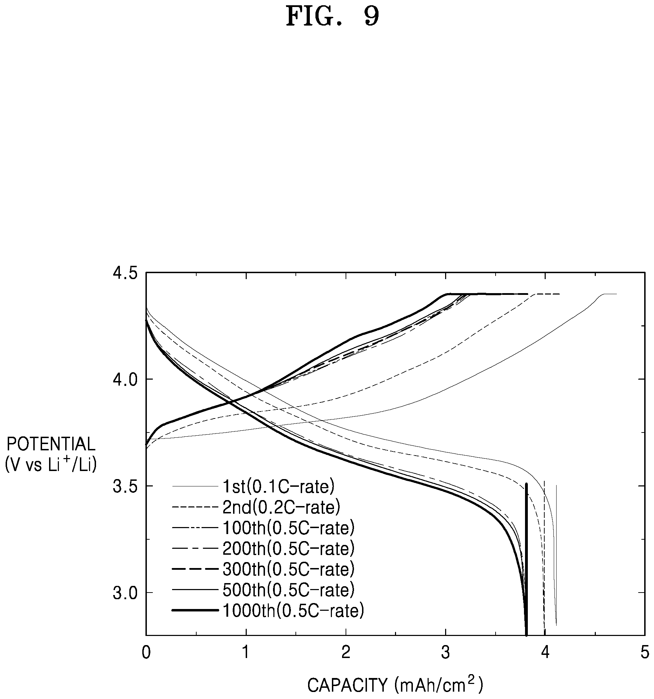

Some of the charging and discharging test results are shown in FIGS. 8 and 9. As shown in FIGS. 8 and 9, it was confirmed that the all-solid-state secondary battery of Example 2 exhibited excellent lifespan characteristics at room temperature over 1,000 times, and that the all-solid-state secondary battery of Example 3 could be driven at 2 mA/cm² for more than 1000 times and was also driven at 3 mA/cm² without a short circuit. It was found that the all-solid-state secondary battery of Example 3 had improved lifespan characteristics at room temperature compared to the all-solid-state secondary battery of Comparative Example 5.

### Evaluation Example 6: X-ray photoelectron spectroscopy (XPS)

For component analysis of the first anode active material layer of the all-solid-state secondary batteries of Examples 1 to 5 and Comparative Examples 1 to 3, X-ray photoelectron spectroscopy (XPS) was performed by using the THERMO K-Alpha XPS system. Here, the spot size was 400 µm, and the resolution was 0.1 eV.

Through the XPS, the reaction and chemical bonding state at the interlayer interface according to lithium migration may be examined. The XPS using laboratory-based Al Kα source (1486.6 eV) may provide information of photoelectrons detected up to 10 nm in general. Therefore, in a structure including an electrode for driving charging and discharging, the analysis at the interlayer interface is not possible. In the present test, a diffusion phenomenon of lithium ions according to electron beam (ion beam) irradiation was used to analyze the reaction at the interlayer interface according to the movement of Li-ions.

First, when an electron beam was irradiated to the surface of the first anode active material layer in the first anode active material layer/LLZO (oxide solid electrolyte)/Li/Cu (current collector) structure, the extraction of lithium ions to the irradiated surface was observed. On the other hand, the removal of lithium ions from the surface to which an electron beam was irradiated was also observed, and accordingly, the reaction and chemical bonding state at the interlayer interface were analyzed in the absence of an electrode.

Since the XPS analyzes the material by removing electrons, a sample is electrically neutralized by using an electron beam and an Ar⁺⁻ ion beam to eliminate a charging phenomenon of the sample. In the present experiment, real-time measurement was carried out by irradiating an electron beam for a certain period of time to raise lithium ions above the interlayer, or by irradiating an ion beam to lower lithium ions from the surface.

Referring to the Li1s spectrum, it was confirmed that the Li-ions raised up as the Li peak increased upon the irradiation of the electron beam, whereas lithium ions lowered down as the Li peak decreased upon the irradiation of the ion beam.

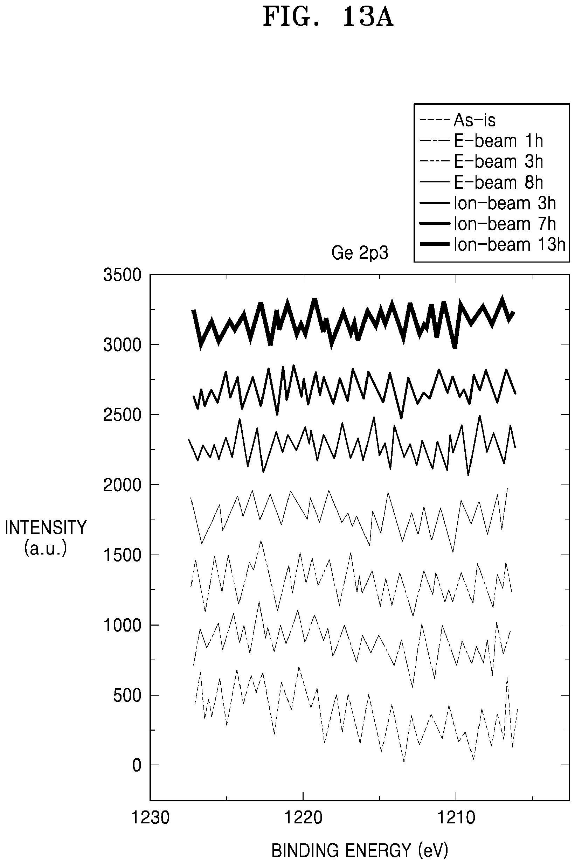

In the case of the GeTe film, as shown in FIG. 13A, the Ge component was etched after the surface was acid-treated, resulting in a structure in which TeO₂(TeOx)(0<x<2) oxide was mixed with Te-metal.

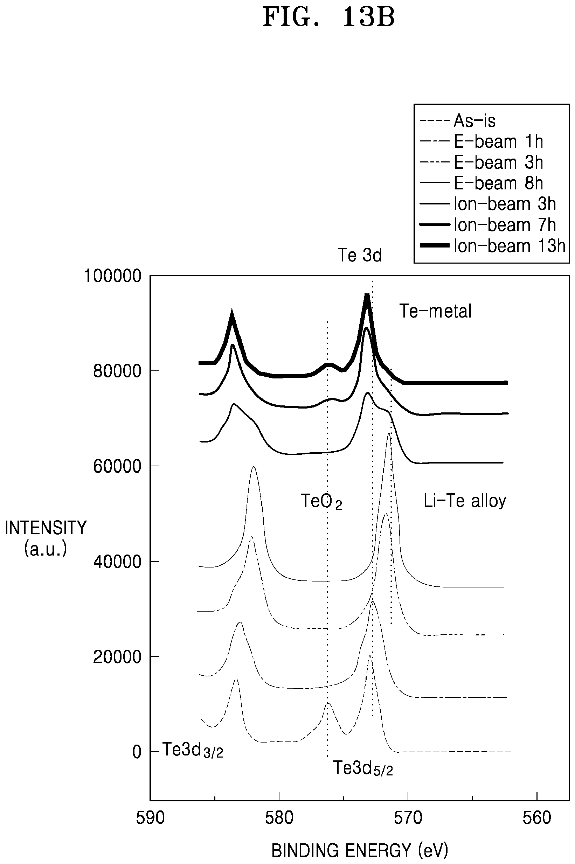

Referring to the Te3d spectrum as shown in FIG. 13B, it was confirmed that lithium ions raised up upon the irradiation of the electron beam and reacted with Te metal to form a Li-Te alloy. On the contrary, it was confirmed that lithium ions lowered down as the Li-Te alloy was decomposed upon the irradiation of the ion beam, thereby re-producing Te-metal and Te-oxide.

After the acid-treatment, Zr-oxide and Ta-oxide, which are solid electrolyte components, were also partially observed in the GeTe interlayer. However, since there was no change according to the movement of lithium ions, it was confirmed that the lithium ions did not react with these oxides.

By examining the XPS on Li1s, Ge2p3, Te3d5, and O1s, the mixing ratio of each element contained in the first anode active material layer was determined as shown in Table 1.

Table 1 shows the XPS results for the Te3d5 and O1s of the composite on the analysis of the first negative active material layer in a region having an intermediate thickness in the first anode active material layer (i.e., at a point of about 10 nm in the surface area of the first anode active material layer adjacent to the solid electrolyte) when measuring by sputtering at an average depth of 0.1 nm per second.

**Table 1**

| Atom% in Te 3d peak | | | | |
|---|---|---|---|---|
| Abscissa | Li -Te | Te | TeOx | TeO₂ |
| As-is | 0 | 57.4 | 8.01 | 34.58 |
| Charging (E-beam irradiation 1h) | 17.61 | 67.27 | 10.58 | 4.54 |
| Charging (E-beam irradiation 3h) | 75.22 | 24.78 | 0 | 0 |
| Charging (E-beam irradiation 8h) | 90.84 | 9.16 | 0 | 0 |
| Discharging (Ion-beam irradiation 3h) | 39.19 | 55.24 | 3.38 | 2.19 |
| Discharging (Ion-beam irradiation 7h) | 23.18 | 59.47 | 9.41 | 7.94 |
| Discharging (Ion-beam irradiation 13h) | 8.82 | 69.1 | 10.28 | 11.8 |

Referring to Table 1, it was confirmed that lithium caused an alloying/de-alloying reaction with Te reversibly during charging and discharging cycles.

As described herein, according to the one or more embodiments, an all-solid-state secondary battery that prevents a short circuit by suppressing a phenomenon in which metal is diffused in an electrode during high-temperature charging and discharging and that has improved cycle characteristics may be prepared. In addition, an all-solid-state secondary battery simultaneously secures rate characteristics and lifespan characteristics under high-capacity and high-current-density driving conditions.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments. While one or more exemplary embodiments have been described with reference to the figures, it will be understood by those of ordinary skill in the art that various changes in form and details may be made therein without departing from the scope as defined by the following claims.

## Claims

1. An all-solid-state secondary battery, comprising:
a cathode comprising a cathode active material;
an anode comprising an anode current collector, a first anode active material layer, and a second anode active material layer; and
a solid electrolyte arranged between the cathode and the anode,
wherein the first anode active material layer is arranged adjacent to the solid electrolyte and comprises:
an M¹-M²Oₓ composite,
a Li-M¹-M²Oₓ composite, or
a combination thereof,
wherein M¹ is a first metal and M² is a second metal,
the first metal and second metal are each independently at least one element that reacts with lithium to form a lithium alloy or a lithium compound, and
x is a number greater than 0, and
the second anode active material layer is arranged between the anode current collector and the first anode active material layer,
the second anode active material layer comprises a second anode active material, and
the second anode active material comprises:
a carbon-containing anode active material, or
a carbon-containing anode active material, and at least one of a metallic anode active material and a metalloid anode active material.

2. The all-solid-state secondary battery of claim 1, wherein, in the M¹-M²Oₓ composite and the Li-M¹-M²Oₓ composite, the first metal and the second metal:
are the same or different from each other,
each maintains a solid state in a solution with a pH of 7 or less, and
each independently has a lithium ion diffusivity of 1×10⁻¹⁴ square centimeters per second or greater at 25°C.

3. The all-solid-state secondary battery of claims 1 or 2, wherein the first metal and the second metal are the same or different from each other, and the first metal and the second metal are each independently silicon, tin, silver, aluminum, zinc, germanium, magnesium, tellurium, lead, arsenic, sodium, bismuth, titanium, boron, tungsten, manganese, iron, nickel, copper, chromium, zirconium, cerium, or a combination thereof; and/or
wherein the first metal and the second metal are identical to or different from each other, and the first anode active material layer comprises Te-TeOₓ, wherein 0<x≤2; Liₐ-Teₓ-Te_{y}O₂, wherein 0<a≤5, 0<x≤3, and 0<y≤2; Li-Te-TeOₓ, wherein 0<x≤2; Te-ZnOₓ, wherein 0<x≤2; Liₐ-Teₓ-Zn_{y}O₂; wherein 0<a≤5, 0<x≤3, and 0<y≤2; or Li-Te-ZnOₓ, wherein 0<x≤2; and/or
wherein, in the M¹-M²Oₓ composite, an amount of M²Oₓ is 0.05 parts by weight to 50 parts by weight, based on 100 parts by weight of a total weight of the M¹-M²Oₓ composite; and/or
wherein, in the Li-M¹-M²Oₓ composite,
(i) an amount of Li is 0.01 parts by weight to 80 parts by weight, based on 100 parts by weight of a total weight of the Li-M¹-M²Oₓ composite,
(ii) an amount of M¹ is 10 parts by weight to 70 parts by weight, based on 100 parts by weight of the total weight of the Li-M¹-M²Oₓ composite, and
(iii) an amount of M²Oₓ is 0.05 parts by weight to 50 parts by weight, based on 100 parts by weight of the total weight of the Li-M¹-M²Oₓ composite.

4. The all-solid-state secondary battery of any of claims 1-3, wherein, in the M¹-M²Oₓ composite and the Li-M¹-M²Oₓ composite, the metals M¹ and M² are different from each other, and the M¹-M²Oₓ composite and the Li-M¹-M²Oₓ composite are each independently a Te-SiOₓ composite wherein 0<x≤2, or a Li-Te-SiOₓ composite wherein 0<x≤2; and/or
wherein a thickness of the first anode active material layer is 10 nanometers to 500 nanometers; and/or
wherein the first anode active material layer comprises a plurality of pores, preferably (i) wherein at least one of the plurality of pores comprises the second anode active material disposed therein, and/or (ii) wherein a size of the plurality of pores in the first anode active material layer is 3 nanometers to 50 nanometers.

5. The all-solid-state secondary battery of any of claims 1-4, wherein
the first anode active material layer comprises a plurality of pores,
at least one of the plurality of pores comprises the second anode active material disposed therein, and
a porosity of the first anode active material layer is less than the porosity of the first anode active material layer that does not comprise the second anode active material disposed therein, or
the first anode active material layer is non-porous by incorporation of the second anode active material.

6. The all-solid-state secondary battery of any of claims 1-5, further comprising a metal thin film disposed between the second anode active material layer and the anode current collector;
preferably wherein the metal thin film comprises one or more of indium, silicon, gallium, tin, aluminum, titanium, zirconium, niobium, germanium, antimony, bismuth, gold, platinum, palladium, magnesium, palladium, silver, or zinc.

7. The all-solid-state secondary battery of any of claims 1-6, wherein
the M¹-M²Oₓ composite in the first anode active material layer is Teₓ-Te_{y}O_{z}, wherein 0<x≤3, 0<y≤2, and 0<z≤2; Teₓ-Al_{y}O_{z}, wherein 0<x≤3, 0<y≤2, and 0<z≤2; Seₓ-Se_{y}O_{z}, wherein 0<x≤3, 0<y≤2, and 0<z≤2; Seₓ-Al_{y}O_{Z}, wherein 0<x≤3, 0<y≤2, and 0<z≤2; Snₓ-Te_{y}O_{Z}, wherein 0<x≤3, 0<y≤2, and 0<z≤2; Teₓ-Sn_{y}O_{z}, wherein 0<x≤3, 0<y≤2, and 0<z≤2; Tiₓ-Te_{y}O_{z}, wherein 0<x≤3, 0<y≤2, and 0<z≤2; or Teₓ-Ti_{y}O_{z}, wherein 0<x≤3, 0<y≤2, and 0<z≤2, and
the Li-M¹-M²Oₓ composite in the first anode active material layer is Liₐ-Teₓ-Te_{y}O_{Z}, wherein 0<a≤5, 0<x≤3, 0<y≤2, and 0<z≤2; Liₐ-Teₓ-Al_{y}O_{z}, wherein 0<a≤5, 0<x≤3, 0<y≤2, and 0<z≤2; Liₐ-Seₓ-Se_{y}O_{z}, wherein 0<a≤5, 0<x≤3, 0<y≤2, and 0<z≤2; Liₐ-Seₓ-Al_{y}O_{z}, where 0<a≤5, 0<x≤3, 0<y≤2, and 0<z≤2; Liₐ-Snₓ-Te_{y}O_{z}, wherein 0<a≤5, 0<x≤3, 0<y≤2, and 0<z≤2; Liₐ-Teₓ-Sn_{y}O_{z}, wherein 0<a≤5, 0<x≤3, 0<y≤2, and 0<z≤2; Liₐ-Tiₓ-Te_{y}O_{z}, wherein 0<a≤5, 0<x≤3, 0<y≤2, and 0<z≤2; or Liₐ-Teₓ-Ti_{y}O_{z}, wherein 0<a≤5, 0<x≤3, 0<y≤2, and 0<_{z}≤₂.

8. The all-solid-state secondary battery of any of claims 1-7, further comprising a lithium film or a lithium alloy film that is located between the second anode active material layer and the anode current collector; and/or
wherein the first anode active material layer has a greater reduction potential of lithium ions than an ion reduction potential of the solid electrolyte; and/or
wherein the carbon-containing anode active material has a particle form, and the carbon-containing anode active material has an average particle diameter of less than or equal to 4 micrometers.

9. The all-solid-state secondary battery of any of claims 1-8, wherein the carbon-containing anode active material comprises amorphous carbon, and the metallic anode active material or the metalloid anode active material comprises indium, silicon, gallium, tin, aluminum, titanium, zirconium, niobium, germanium, antimony, bismuth, gold, platinum, palladium, magnesium, silver, zinc, nickel, iron, cobalt, chromium, cesium, cerium, sodium, potassium, calcium, yttrium, bismuth, tantalum, hafnium, barium, vanadium, strontium, lanthanum, or a combination thereof; and/or
wherein the second anode active material layer comprises a composite consisting of a first particle and a second particle, wherein the first particle consists of amorphous carbon, and the second particle consists of a metal or a metalloid; or a combination of a first particle and a second particle, wherein the first particle consists of amorphous carbon and the second particle consists of a metal or a metalloid, and the amount of the second particle is 1 weight percent to 60 weight percent, based on a total weight of the composite.

10. The all-solid-state secondary battery of any of claims 1-9, further comprising:
a third anode active material layer arranged between the anode current collector and the second anode active material layer, a third anode active material layer arranged between the second anode active material layer and the first anode active material layer, or a third anode active material layer arranged between the anode current collector and the second anode active material layer, and arranged between the second anode active material layer and the first anode active material layer,
wherein the third anode active material layer is a metal layer comprising lithium or a lithium alloy.

11. The all-solid-state secondary battery of any of claims 1-10, wherein the anode current collector, the first anode active material layer, the second anode active material layer, and regions therebetween do not comprise lithium in an initial state or a post-full discharge state; and/or
wherein the solid electrolyte is an oxide-containing solid electrolyte, a sulfide-containing solid electrolyte, or a combination thereof, preferably wherein the oxide-containing solid electrolyte comprises one or more of Li_{1+x+y}AlₓTi₂₋ₓSi_{y}P_{3-y}O₁₂, wherein 0<x<2 and 0≤y<3; BaTiO₃; Pb(ZrₐTi₁₋ₐ)O₃, wherein 0≤a≤1 (PZT); Pb₁₋ₓLaₓZr_{1-y}Ti_{y}O₃ (PLZT), wherein 0≤x<1 and 0≤y<1; Pb(Mg₃Nb_{2/3})O₃-PbTiO₃(PMN-PT); HfO₂; SrTiO₃; SnO₂; CeO₂; Na₂O; MgO; NiO; CaO; BaO; ZnO; ZrO₂; Y₂O₃; Al₂O₃; TiO₂; SiO₂; Li₃PO_{4'} LiₓTi_{y}(PO₄)₃, wherein 0<x<2 and 0<y<3; LiₓAl_{y}Ti_{z}(PO₄)₃, wherein 0<x<2, 0<y<1, and 0<z<3; Li_{1+x+y}(AlₐGa₁₋ₐ)ₓ(Ti_{b}Ge_{1-b})₂₋ₓSi_{y}P_{3-y}O₁₂, wherein 0≤x≤1, 0≤y≤1, 0≤a≤1, and 0≤b≤1; LiₓLa_{y}TiO₃, wherein 0<x<2 and 0<y<3; Li₂O; LiOH; Li₂CO₃; LiAlO₂; Li₂O-Al₂O₃-SiO₂-P₂O₅-TiO₂-GeO₂; or Li₃₊ₓLa₃M₂O₁₂, wherein M is Te, Nb, or Zr, and x is an integer from 1 to 10.

12. The all-solid-state secondary battery of claim 11, wherein the sulfide-containing solid electrolyte comprises one or more of Li₂S-P₂S₅; Li₂S-P₂S₅-LiX, wherein X is a halogen; Li₂S-P₂S₅-Li₂O; Li₂S-P₂S₅-Li₂O-Lil; Li₂S-SiS₂; Li₂S-SiS₂-LiI; Li₂S-SiS₂-LiBr; Li₂S-SiS₂-LiCl; Li₂S-SiS₂-B₂S₃-Lil; Li₂S-SiS₂-P₂S₅-LiI; Li₂S-B₂S₃; Li₂S-P₂S₅-ZₘSₙ, wherein m and n are positive numbers, and Z is Ge, Zn, or Ga; Li₂S-GeS₂; Li₂S-SiS₂-Li₃PO₄; Li₂S-SiS₂-LiₚMO_{q}, wherein p and q are positive numbers, and M is P, Si, Ge, B, Al, Ga, or In; Li₇₋ₓPS₆₋ₓClₓ, wherein 0<x<2; Li₇₋ₓPS₆₋ₓBrₓ, wherein 0<x<2; or Li₇₋ₓPS₆₋ₓIₓ, wherein 0<x<2.

13. A method of preparing the all-solid-state secondary battery of any of claims 1-12, the method comprising:
providing a solid electrolyte;
arranging a first anode active material layer on a surface of the solid electrolyte;
forming a plurality of pores in the first anode active material layer to prepare a porous first anode active material layer;
arranging an anode current collector on the porous first anode active material layer, wherein a second anode active material is arranged on the anode current collector; and
arranging a cathode active material layer on an opposite surface of the solid electrolyte;
preferably
wherein the forming of the plurality of pores in the first anode active material layer further comprises
an acid treatment of the first anode active material layer; or
treatment of the first anode active material layer by using a pore former.

14. The method of claim 13, wherein the first anode active material layer comprises a metal alloy oxide comprising:
an element present as an ion in a solution having a pH of 7 or less; and
an element that maintains a solid state in a solution having a pH of 7 or less;
preferably wherein
the first anode active material layer comprises a Ge-Te alloy oxide,
a molar ratio of Ge to Te in the Ge-Te alloy oxide before the acid treatment is 2.5:1 to 1:500, and
the molar ratio of Ge to Te in the Ge-Te alloy oxide after the acid treatment is 1:1.5 to 1:100.

15. The method of claims 13 or 14, wherein the arranging of the first anode active material layer on the one surface of the solid electrolyte is performed by sputtering, spin coating, drop coating, spray coating, or solution infiltration; and/or
wherein the first anode active material layer comprises one or more oxides of GeTe, Ge_{0.5}Te_{1.0}, Ge_{0.54}Te, Ge_{0.6}Te, Ge_{0.65}Te, Ge_{0.7}Te, Ge_{0.75}Te, Ge_{0.8}Te, Ge_{0.85}Te, Ge_{0.9}Te, Ge_{0.95}Te, Ge_{0.35}Te_{0.65}, Ga_{2.0}Te_{3.0}, TeZn₂, Bi₂Te₃, GeSe, Sb₂Te₃, Bi₁₄Te₆, Te-Pb, AuTe₂, As₄Te₃, As₂Te₃, SnTe, SrTe, Y₂Te₃, ZrTe₅, NbTe₂, MoTe₂, Ag₂Te, CdTe, In₂Te₃, SnTe, PdTe₂, Bi-Sb-Te, Bi-Se-Te, Se-Sb-Te, Ge-Sb-Te, or Ge-Sb-Se-Te.
